# EUROPEAN PATENT APPLICATION

(11) **EP 4 838 277 A1**
(43) Date of publication of application: **11.11.2026**
(21) Application number: 25744603.9
(22) Date of filing: 22.01.2025
(51) Int. Cl.: G02B 6/38

(54) **OPTICAL CABLE CONNECTOR AND CONNECTING BOX**

(30) Priority: 22.01.2024 CN 202410088795; 22.01.2024 CN 202420149247 U
(71) Applicant: Huawei Technologies Co., Ltd., Shenzhen, Guangdong 518129 (CN)
(72) Inventor: TANG, Feng, Shenzhen, Guangdong 518129 (CN); HU, Jian, Shenzhen, Guangdong 518129 (CN); MA, Zhigang, Shenzhen, Guangdong 518129 (CN)
(74) Representative: Körber, Martin Hans
(86) International application number: PCT/CN2025/073870
(87) International publication number: WO 2025/157164

(57) **Abstract**

Embodiments of this application relate to the field of communication technologies, and provide an optical cable connector and a connection box. The optical cable connector includes a main housing, a ferrule assembly, a connecting element, and an optical cable. A first accommodation cavity that runs through a first end and a second end is provided in the main housing. Both the ferrule assembly and the connecting element are located within the first accommodation cavity, the ferrule assembly is disposed close to the first end, the connecting element is disposed close to the second end, and the connecting element is coupled to the main housing. The optical cable partially passes through the connecting element and is connected to the connecting element. When the optical cable receives external pulling force, the external force on the optical cable may be transferred to the main housing via the connecting element. This can effectively reduce/avoid generation of pulling force between one end of the optical cable in the second end of the main housing and one end that is of the optical cable and that is connected to the ferrule assembly, avoid breakage of an optical fiber that is of the optical cable and that is located in the main housing due to the pulling force, and avoid adverse impact of breakage of the optical fiber on normal working of the optical cable connector, to effectively improve working reliability and stability of the optical cable connector.

## Description

This application claims priority to Chinese Patent Application No. 202410088795.X, filed with the China National Intellectual Property Administration on January 22, 2024, and entitled "AN OPTICAL CABLE CONNECTOR AND A CONNECTION BOX", and claims priority to Chinese Patent Application No. 202420149247.9, filed with the China National Intellectual Property Administration on January 22, 2024, and entitled "AN OPTICAL CABLE CONNECTOR AND A CONNECTION BOX", both of which are incorporated herein by reference.

### TECHNICAL FIELD

This application relates to the field of communication technologies, and in particular, to an optical cable connector and a connection box.

### BACKGROUND

An optical distribution network (optical distribution network, ODN) is a network including all passive optical fibers and passive devices (such as optical splitters) between an optical line terminal (Optical Line Terminal, OLT) and an optical network unit (Optical Network Unit, ONU). The ODN connects one OLT device and a plurality of ONU devices to provide bidirectional transmission for optical signals.

In optical distribution network engineering, a connection box (for example, an optical cross-connection box, an optical distribution box, or a fiber access terminal) is usually used for interconnection between optical fibers, to implement network transmission. Specifically, an adapter is usually disposed on the connection box, and two ends of the adapter are connected to two optical cable connectors respectively. Insertion of the two optical cable connectors into the two ends of the adapter allows interconnection between two optical fibers. Currently, an optical cable connector usually includes a housing and a ferrule assembly and an optical cable that are located in the housing. The housing includes a first end and a second end that are opposite to each other. The ferrule assembly is located at the first end of the housing and is connected to the housing. A part of the optical cable extends into the housing from the second end of the housing, and is connected to the ferrule assembly at the first end of the housing.

However, the optical cable connector may be pulled in a process of mating between the optical cable connector and the connection box and on-site arrangement of the optical cable connector and the connection box. In the foregoing optical cable connector, when the optical cable receives external pulling force, the external force is transferred to the optical cable in the housing, probably causing an optical fiber in the optical cable to be broken, and further the optical cable to be damaged. This affects normal working of the optical cable connector and causes the optical cable connector to be less reliable and stable.

### SUMMARY

Embodiments of this application provide an optical cable connector and a connection box, to effectively reduce/avoid breakage of an optical fiber in the optical cable connector, so as to effectively improve working reliability and stability of the optical cable connector.

A first aspect of embodiments of this application provides an optical cable connector, including a main housing, a ferrule assembly, a connecting element, and an optical cable. The main housing includes a first end and a second end that are opposite to each other, and a first accommodation cavity that runs through the first end and the second end is provided in the main housing. The ferrule assembly is located in the first accommodation cavity. The connecting element is located in the first accommodation cavity and is disposed close to the second end, and the connecting element is coupled to the main housing. The optical cable partially passes through the connecting element and is connected to the connecting element, and one end of the optical cable located in the main housing is connected to the ferrule assembly.

In embodiments of this application, the connecting element is coupled to the main housing. In this way, when the optical cable receives external pulling force, the external force on the optical cable may be transferred to the main housing via the connecting element, to avoid transferring the external force to one end that is of the optical cable and that is connected to the ferrule assembly. This can effectively reduce/avoid generation of pulling force between one end of the optical cable located at the second end of the main housing and one end that is of the optical cable and that is connected to the ferrule assembly, avoid breakage of an optical fiber that is of the optical cable and that is located in the main housing due to the pulling force, and avoid adverse impact of breakage of the optical fiber on normal working of the optical cable connector, to effectively improve working reliability and stability of the optical cable connector.

In a possible implementation, an outer sheath of the optical cable may be bonded to the connecting element, to transfer the external force on the optical cable to the main housing via the connecting element, so as to avoid impact on the optical fiber in the optical cable.

In a possible implementation, a first limiting portion is provided on the connecting element, and a second limiting portion is provided on the main housing. The first limiting portion abuts against the second limiting portion, and a coupling relationship is formed between the connecting element and the main housing when the first limiting portion abuts against the second limiting portion. In this way, a case in which the external force is transferred to a part that is of the optical cable and that is located at the first end of the main housing can be effectively reduced or avoided, and tension of the optical cable inside the main housing can be effectively reduced, to effectively avoid breakage of the optical cable, avoid a case in which the breakage of the optical cable affects normal working of the optical cable connector, and effectively improve working stability and reliability of the optical cable connector.

In a possible implementation, a pressing surface of the first limiting portion faces the second end of the main housing, and a pressing surface of the second limiting portion faces the first end of the main housing. In this way, the external force on the optical cable may be transferred to the main housing, to avoid a case in which a part that is of the optical cable and that is located at the first end of the main housing is broken due to the pulling force.

In a possible implementation, a first limiting slot is provided on one of the connecting element and the main housing, and a first limiting block that engages with the first limiting slot is provided on the other of the connecting element and the main housing. The first limiting block engages with the first limiting slot, to limit relative rotation between the main housing and the connecting element. In this way, rotation of the connecting element can be effectively reduced or avoided in a process of assembling the connecting element and the main housing, and a case in which rotation of the connecting element relative to the main housing affects normal assembly between the connecting element and the main housing can be reduced or avoided, to improve accuracy of mating between the connecting element and the main housing.

In a possible implementation, the optical cable connector further includes a base. The base is located in the first accommodation cavity of the main housing. One end of the base is connected to the connecting element, and the other end of the base is connected to the ferrule assembly and the main housing. The optical cable passes through the base and is connected to the ferrule assembly. The base may achieve a function of connecting the connecting element and the ferrule assembly, so that the optical cable, the connecting element, and the ferrule assembly may be assembled into an overall structure, to facilitate assembly with the main housing and facilitate assembly and disassembly of the optical cable connector.

In a possible implementation, a connecting post is provided on one of the base and the connecting element, and a connecting hole that engages with the connecting post is provided on the other of the base and the connecting element. The connecting post passes through the connecting hole, and the connecting element and the base are connected through coordination between the connecting post and the connecting hole. In this way, separation between the connecting element and the base can be reduced or avoided. This helps improve reliability and stability of a connection between the connecting element and the base, and improve stability of an internal structure of the optical cable connector.

In a possible implementation, a window is further provided on the base. A worker can check an internal disposition status of the optical cable through the window, to reduce/avoid damage to the optical cable inside the base and avoid a case in which the damage to the optical cable affects normal working of the optical cable connector.

In a possible implementation, a third limiting portion is provided on an inner wall of the main housing, and a fourth limiting portion that engages with the third limiting portion is provided on a periphery of the base. The fourth limiting portion abuts against the third limiting portion. Mating between the third limiting portion and the fourth limiting portion may provide positioning for the base in an axial direction of the main housing, so that deviation of the base in the axial direction of the main housing can be reduced or avoided, to help improve stability and reliability of assembly between the base and the main housing.

In a possible implementation, the optical cable connector further includes a sleeve. One end of the sleeve is sleeved on the second end of the main housing and is connected to the main housing, and the other end of the sleeve is sleeved on the optical cable and is connected to the optical cable. In this way, when a part that is of the optical cable and that is located outside the main housing is pulled by external force, the optical cable may further transfer the force to the main housing via the sleeve, to reduce/avoid transferring the external force to the part that is of the optical cable and that is located at the first end of the main housing, so as to effectively reduce/avoid breakage of the optical cable due to the force on the part that is of the optical cable and that is located at the first end of the main housing.

In a possible implementation, the ferrule assembly includes a housing assembly and a ferrule structure, a second accommodation cavity is provided on the housing assembly, and the ferrule structure at least partially passes through the second accommodation cavity. A ferrule structure in a retracted state tends to extend out of the housing assembly, so that the ferrule structure can abut against a ferrule structure at the other end of an adapter more tightly, tightness of mating between two groups of ferrule structures can be effectively improved, and efficiency of optical signal transmission between the two groups of ferrule structures is improved.

In a possible implementation, the ferrule assembly further includes an elastic component. The elastic component is located in the second accommodation cavity, one end of the elastic component abuts against an inner wall of the second accommodation cavity, and the other end of the elastic component is connected to the ferrule structure. The elastic component may provide an elastic buffer between the ferrule structure and the housing assembly, to reduce/avoid rigid impact between the ferrule structure and the housing assembly, avoid a case in which rigid contact between the ferrule structure and the housing assembly affects tightness of a connection between the ferrule structure and the housing assembly, and help improve firmness of the connection between the ferrule structure and the housing assembly. In addition, the elastic component can further enable the two ferrule structures at two ends of the adapter to be closely attached to each other, so that stability of an interconnection between the two ferrule structures can be effectively improved, to effectively improve optical signal transmission efficiency.

In a possible implementation, the ferrule structure includes a plurality of ferrules, a through hole is provided on each ferrule, the optical cable includes a plurality of optical fibers, and the plurality of optical fibers extend through the through holes of the ferrules respectively. At least two ferrules are connected to one elastic component. In this way, a quantity of elastic components in the optical cable connector can be effectively reduced, and space occupied by the elastic components in the optical cable connector can be reduced, to help improve a miniaturization design of the optical cable connector. In addition, compared with a case in which one elastic component is disposed on one ferrule, interference between two adjacent elastic components can be further reduced by connecting at least two ferrules and one elastic component, so that the elastic component can be disposed in the housing assembly. In addition, the at least two ferrules are connected to one elastic component. In this way, in an extending and shrinking process of several ferrules disposed on a same elastic component relative to the housing assembly, the ferrules may further have a good synchronization rate, so that evenness of extending and shrinking of the ferrules can be improved, to effectively improve stability of mating between the optical cable connector and the adapter.

In a possible implementation, the elastic component is a spring, and the spring is sleeved outside the ferrule.

In a possible implementation, the plurality of ferrules are arranged in an array in M rows and N columns, where M≥2, and N≥2; and
a quantity of elastic components is N, and M ferrules are provided in each elastic component; or
a quantity of elastic components is M, and N ferrules are provided in each elastic component.

In a possible implementation, the housing assembly includes a front housing and a rear housing. A first cavity is provided on the front housing, and the rear housing at least partially extends into the first cavity and is connected to the front housing. Each ferrule includes a connecting portion and a plug-in portion. The connecting portion is located in the first cavity, the plug-in portion is connected to the connecting portion, and the plug-in portion extends out of a front end of the front housing. The elastic component is sleeved on the connecting portion, one end of the elastic component is connected to the ferrule, and the other end of the elastic component is connected to the rear housing.

In a possible implementation, the front housing includes M sub front housings, and the M sub front housings are sequentially connected in a direction from a first row to an M^{th} row. One first cavity is provided on the sub front housing, one elastic component is provided in each first cavity, and N ferrules extend through each elastic component.

Alternatively, the front housing includes N sub front housings, and the N sub front housings are sequentially connected in a direction from a first column to an N^{th} column. One first cavity is provided on the sub front housing, one elastic component is provided in each first cavity, and M ferrules extend through each elastic component.

The front housing includes a plurality of sub front housings that are independent of each other and that are connected to each other, and each sub front housing may be produced independently of each other, and then assembled and connected to the rear housing. In this way, independence of disposing the sub front housings can be improved. In addition, a quantity of combinations of the sub front housings is changed, so that the ferrules in the front housing can be arranged in a plurality of different manners, to effectively improve flexibility of disposing the ferrules.

In a possible implementation, the front housing is of an integrated structure, and an isolation wall is disposed in the first cavity of the front housing. The isolation wall divides the first cavity into M sub cavities, and the M sub cavities are sequentially arranged in a direction from a first row to an M^{th} row. One elastic component is provided in the sub cavity, and N ferrules extend through the elastic component. Alternatively, the isolation wall divides the first cavity into N sub cavities, and the N sub cavities are sequentially arranged in a direction from a first column to an N^{th} column. One elastic component is provided in the sub cavity, and M ferrules extend through each elastic component.

The front housing is of the integrated structure. In this way, there is a thickness of only one isolation wall between two adjacent sub cavities, so that an isolation thickness between the two adjacent sub cavities can be effectively reduced, an overall size of the front housing can be effectively reduced, and a miniaturization design of the front housing can be improved, to effectively reduce an overall size of the optical cable connector and implement a miniaturization design of the optical cable connector.

In a possible implementation, a quantity of rear housings is the same as a quantity of the M sub front housings of the front housing, or a quantity of rear housings is the same as a quantity of the N sub front housings of the front housing; or
a quantity of rear housings is the same as a quantity of the M sub cavities of the front housing, or a quantity of rear housings is the same as a quantity of the N sub cavities of the front housing.

In a possible implementation, a plurality of holes that allow the ferrules to pass through are provided on a side that is of the front housing and that faces the first end of the main housing, and each ferrule passes through one hole. A connecting rib is provided between two adjacent holes. The connecting rib may separate two adjacent ferrules, to reduce/avoid mutual interference between the two adjacent ferrules, and help improve overall structural stability of the optical cable connector.

In a possible implementation, a fifth limiting portion is provided at one end that is of the connecting portion and that is close to the plug-in portion, and a sixth limiting portion that engages with the fifth limiting portion is provided inside the front housing. One end of the fifth limiting portion abuts against the sixth limiting portion, and the other end of the fifth limiting portion abuts against the elastic component. The sixth limiting portion and the fifth limiting portion may achieve a limiting and blocking function, so that detachment of the ferrule from a front end of the front housing can be avoided. This improves stability and reliability of disposing the ferrule in the front housing.

In a possible implementation, a first groove is provided on the front housing, and a first clamping portion that engages with the first groove is provided on the rear housing. The first clamping portion is clamped in the groove, and the front housing and the rear housing are connected through coordination between the first clamping portion and the first groove. In this way, detachment between the front housing and the rear housing can be effectively avoided, and reliability and firmness of a connection between the front housing and the rear housing can be improved.

In a possible implementation, a second clamping portion is provided at one end that is of the rear housing and that is away from the front housing, and a second groove that engages with the second clamping portion is provided on the base. The second clamping portion is clamped in the second groove, and the base is connected to the rear housing through coordination between the second clamping portion and the second groove. In this way, firmness and reliability of connections between the front housing, the rear housing, and the base can be improved, and detachment of the base from the rear housing and the front housing can be effectively avoided. This helps improve overall structural stability of an internal component of the optical cable connector.

In a possible implementation, a second cavity connected to the first cavity is provided on the rear housing, and a third cavity in communication with the second cavity is provided on the base. The optical fibers in the optical cable successively pass through the third cavity and the second cavity and extend through the through holes of the ferrules respectively.

In a possible implementation, the optical cable connector further includes a lock cap. The lock cap is sleeved on the main housing and rotatably engages with the main housing. The lock cap may mate a structure on the adapter, so that the optical cable connector may be connected to the adapter.

In a possible implementation, the optical cable connector further includes a sealing component. The sealing component is located between the main housing and the lock cap, and the sealing component is configured to provide sealing between the main housing and the lock cap. In this way, a case in which external water stains, stains, and the like enter the main housing through a gap between the lock cap and the main housing can be effectively reduced or avoided. This helps improve cleanness inside the main housing, and avoid a case in which water stains, stains, and the like enter the main housing, and affect stability of mating between the optical cable connector and the adapter, and helps improve stability of optical signal transmission of the optical cable connector.

In a possible implementation, the optical cable connector further includes a tail sleeve. The tail sleeve is sleeved on the main housing, and the tail sleeve is at least sleeved on a part of the sleeve. The tail sleeve may provide elastic protection for the optical cable. In a bending process of the optical cable, the tail sleeve may increase a bending radius of the optical cable, to avoid a case in which the optical cable is broken due to an excessively small bending radius, so as to avoid a case in which breakage of the optical cable affects signal transmission between optical cable connectors.

In a possible implementation, a third groove is provided on the main housing, and a third clamping portion that engages with the third groove is provided on the tail sleeve. The third clamping portion is clamped in the third groove, and the tail sleeve is connected to the main housing through coordination between the third clamping portion and the third groove. The mating between the third clamping portion and the third groove can reduce/avoid separation between the tail sleeve and the main housing. This helps improve reliability and stability of a connection between the main housing and the tail sleeve, and improve overall structural stability of the optical cable connector.

In a possible implementation, the sleeve is heat shrink tubing.

In a possible implementation, the ferrule is a ceramic ferrule. Ceramic has high strength and rigidity, so that precision of the ferrule can be improved, and in a process of interconnecting to the optical cable connector, ferrules at two ends can be better aligned. This helps improve accuracy of alignment of optical fibers in the ferrules, and can effectively reduce a loss of transmission between the optical fibers, to effectively improve efficiency of optical signal transmission between optical cable connectors. In addition, a surface of the ceramic ferrule is smooth and easy to clean, so that dust on the surface of the ferrule can be effectively reduced, and impact of excessive dust on the surface of the ferrule on optical signal transmission can be avoided. This helps further reduce the loss and improve the efficiency of the optical signal transmission. In addition, the ceramic ferrule has the high rigidity and strength, so that damage or breakage of the ferrule can be effectively reduced or avoided. This helps improve reliability and stability of the optical signal transmission between the optical cable connectors.

In a possible implementation, the optical cable includes a cable core and an outer sheath, and the outer sheath is sleeved on the cable core. The connecting element is sleeved on the outer sheath and is bonded to the outer sheath. In this way, separation between the optical cable and the connecting element can be effectively reduced/avoided, and firmness and reliability of a connection between the optical cable and the connecting element can be effectively improved.

A second aspect of this application provides a connection box, including a housing and an adapter. The adapter is located on the housing, and the adapter is configured to mate any one of the foregoing optical cable connectors. The adapter in the connection box matches the foregoing optical cable connector, so that two optical cable connectors inside and outside the connection box can be interconnected via the adapter, to implement optical signal transmission. The optical cable connector has high reliability and stability, and can effectively improve stability and reliability of optical signal transmission in the connection box.

In a possible implementation, positioning sleeves whose quantity is the same as a quantity of ferrules in the optical cable connector are provided in the adapter, and the positioning sleeve is configured to be corresponding to arrangement of the ferrules. A positioning through hole is provided in each positioning sleeve, and two ends of the positioning through hole allows for insertion of the ferrules respectively. In this way, connection co-axiality of the ferrules can be effectively improved, and interconnection accuracy of the ferrules is improved. Therefore, efficiency of signal transmission between optical fibers is effectively improved.

A third aspect of embodiments of this application provides an optical cable connector, including: a main housing, wherein the main housing comprises a first end and a second end that are opposite to each other, and a first accommodation cavity that runs through the first end and the second end is provided in the main housing;

a ferrule assembly, wherein the ferrule assembly is located in the first accommodation cavity; an optical cable, wherein the optical cable partially passes through the main housing, and one end of the optical cable located in the main housing is connected to the ferrule assembly; a lock cap, wherein the lock cap is sleeved on the main housing and rotatably engages with the main housing; wherein the main housing and the lock cap are provided with a third limiting block on one of them, and a seventh limiting portion on the other of them, the seventh limiting portion is provided with a notch used for the third limiting block to pass through.

In this way, when the lock cap and the main housing need to be assembled or disassembled, the third limiting block can be aligned with the notch, thereby facilitating the installation and disassembly between the lock cap and the main housing. By rotating the lock cap to misalign the third limiting block from the notch, the seventh limiting portion can exert a limiting and blocking effect on the third limiting block, thereby preventing the lock cap from detaching from the main housing, so as to effectively improve the overall structural stability of the optical cable connector.

In a possible implementation, the third limiting block is located on the outer side of the main housing, and the seventh limiting portion is located on the inner wall of the lock cap and is disposed along the circumferential direction of the inner wall.

In a possible implementation, the lock cap is located at the first end of the main housing, and the seventh limiting portion is located on a side of the third limiting block facing the first end. In this way, during the use of the optical cable connector, the third limiting block can block and limit the seventh limiting portion, which can effectively avoid a case in which the lock cap moves relative to the main housing, prevent the lock cap from detaching from the main housing, and thereby effectively improve the structural stability of the optical cable connector.

In a possible implementation, the first end of the main housing is provided with an opening slot, and the opening slot extends from the end portion of the main housing along the axial direction of the main housing. The opening slot can coordinate with a positioning key on an adapter, to provide circumferential limiting for mating between the main housing and the adapter, so as to avoid relative rotation between the main housing and the adapter, prevent the main housing from rotating relative to the adapter during the locking process of the lock cap, and thereby effectively improve the reliability of locking the lock cap.

In a possible implementation, a flange is provided on the periphery of the main housing, the opening slot extends to a position close to the flange, the inner wall of the lock cap has a limiting platform, and the flange abuts against the limiting platform. Coordination between the limiting platform and the flange can provide axial positioning for assembly between the main housing and the lock cap, which can reduce or avoid deviation between the lock cap and the main housing during assembly, thereby effectively improving the assembly precision between the main housing and the lock cap.

In a possible implementation, the main housing and the lock cap are provided with two fourth limiting blocks on one of them, and the two fourth limiting blocks are spaced along the circumferential direction; the other of the main housing and the lock cap has a second limiting column, the second limiting column is located between the two fourth limiting blocks, and the second limiting column can rotate within an angle range defined by the two fourth limiting blocks. In this way, during mating between the optical cable connector and the adapter, the lock cap is sleeved on the adapter, and a locking block on the lock cap enters a locking slot on the adapter. When the lock cap rotates by any angle relative to the main housing, the locking block can enter the locking slot from an opening of the locking slot, which can effectively reduce or avoid a case in which the locking block cannot mate the locking slot due to an excessively large rotation angle of the lock cap, thereby helping improve the precision of mating between the locking block and the locking slot.

In a possible implementation, the second limiting column is located on the outer wall of the flange; the two fourth limiting blocks are located on the inner wall of the lock cap, and the two fourth limiting blocks are spaced along the circumferential direction of the lock cap. The second limiting column located on the flange can rotate within the angle range defined by the two fourth limiting blocks to limit the rotation range of the lock cap, so that the locking block on the lock cap can smoothly enter the locking slot on the adapter.

In a possible implementation, the inner wall of the lock cap has a fifth limiting block, the fifth limiting block is disposed along the circumferential direction of the lock cap, and a gap is provided between the start end and the terminal end of the fifth limiting block; the outer wall of the flange has a second limiting column, the second limiting column is located within the gap between the start end and the terminal end of the fifth limiting block, and the second limiting column can rotate within an angle range defined by the start end and the terminal end. The start end and the terminal end of the fifth limiting block can limit the second limiting column so that the lock cap can rotate within a designated range, enabling the locking block on the lock cap to smoothly enter the locking slot on the adapter.

In a possible implementation, the flange is provided with a second notch, and the lock cap has a third limiting column; the third limiting column is located within the second notch, and the third limiting column can rotate within an angle range defined by the notch. This can make the lock cap rotate within a designated range relative to the main housing, enabling the locking block on the lock cap to smoothly enter the locking slot on the adapter.

In a possible implementation, the main housing is of an integrated structure. This can improve the firmness and reliability of the structure of the main housing, thereby helping improve the overall structural stability and reliability of the optical cable connector.

In a possible implementation, it further comprises a crimping ring, the crimping ring is sleeved on the optical cable and connected to the optical cable; the crimping ring is further sleeved on the second end of the main housing, and the crimping ring is used for compressing the optical cable against the main housing. This can improve the firmness and reliability of the connection between the optical cable and the main housing, thereby helping improve the overall structural stability of the optical cable connector.

In a possible implementation, the optical cable includes an optical cable body and a reinforcing layer sleeved on the optical cable body, and the reinforcing layer is partially compressed between the crimping ring and the main housing. In this way, the optical cable is connected to the crimping ring and the main housing through the reinforcing layer, which can effectively reduce or avoid separation between the optical cable and the main housing, thereby effectively improving the firmness and reliability of the connection between the optical cable and the main housing.

In a possible implementation, the periphery of the base has a shoulder portion, the main housing has an elastic clamping portion, and the elastic clamping portion abuts against the end face of the shoulder portion. Coordination between the shoulder portion and the elastic clamping portion can implement limiting in the axial direction, which can reduce or avoid axial movement between the main housing and the base, thereby helping improve the reliability and stability of the axial connection between the main housing and the base.

In a possible implementation, a front end of the ferrule assembly projects out of the first end of the main housing, which facilitates cleaning of the end face of the ferrule assembly. The first end of the main housing projects out of a front end of the lock cap, which facilitates observation of mating between the main housing and the adapter, thereby helping improve the accuracy of mating between the main housing and the adapter.

A fourth aspect of embodiments of this application provides a connection box, including a housing and an adapter, the adapter is located on the housing, and the adapter is configured to mate any one of the foregoing optical cable connectors.

### BRIEF DESCRIPTION OF DRAWINGS

FIG. 1 is a diagram of a structure of an optical cable connector according to an embodiment of this application;
FIG. 2 is an exploded view of an optical cable connector according to an embodiment of this application;
FIG. 3 is a sectional view of an optical cable connector in a cross section according to an embodiment of this application;
FIG. 4 is a diagram of a structure of a connecting element according to an embodiment of this application;
FIG. 5 is a sectional view of a main housing according to an embodiment of this application;
FIG. 6 is a sectional view of mating between a main housing and a base in a cross section according to an embodiment of this application;
FIG. 7 is a sectional view of mating between a main housing and a base in another cross section according to an embodiment of this application;
FIG. 7A is an enlarged view of an area A in FIG. 6;
FIG. 8 is a diagram of a structure of a base according to an embodiment of this application;
FIG. 8A is a diagram of a structure of another base according to an embodiment of this application;
FIG. 8B is a diagram of a structure of another main housing according to an embodiment of this application;
FIG. 9 is a diagram of a structure of a ferrule assembly according to an embodiment of this application;
FIG. 10 is a diagram of a structure of an 8-core optical cable connector from a perspective according to an embodiment of this application;
FIG. 11 is a diagram of a structure of an 8-core optical cable connector from another perspective according to an embodiment of this application;
FIG. 12 is a sectional view of a ferrule assembly according to an embodiment of this application;
FIG. 13 is a sectional view of mating between a housing assembly and a base according to an embodiment of this application;
FIG. 14 is a diagram of a structure of a front housing according to an embodiment of this application;
FIG. 15 is a diagram of a structure of a rear housing according to an embodiment of this application;
FIG. 16 is a diagram of a structure of another front housing according to an embodiment of this application;
FIG. 17 is a sectional view of an optical cable connector in another cross section according to an embodiment of this application;
FIG. 18 is a diagram of a structure of a main housing according to an embodiment of this application;
FIG. 19 is a sectional view of a lock cap according to an embodiment of this application;
FIG. 19A is a diagram of a structure of a main housing from another perspective according to an embodiment of this application;
FIG. 19B is a diagram of a structure of a lock cap according to an embodiment of this application;
FIG. 19C is a diagram of a structure of mating between a main housing and a lock cap according to an embodiment of this application;
FIG. 19D is a diagram of a structure of another lock cap according to an embodiment of this application;
FIG. 19E is an exploded view of another optical cable connector according to an embodiment of this application;
FIG. 20 is a diagram of a structure of mating between a dust cap and an optical cable connector according to an embodiment of this application;
FIG. 21 is an exploded view of mating between a dust cap and an optical cable connector according to an embodiment of this application;
FIG. 22 is a diagram of a structure of a connection box according to an embodiment of this application;
FIG. 23 is a diagram of a structure of an adapter from a perspective according to an embodiment of this application;
FIG. 24 is a diagram of a structure of an adapter from another perspective according to an embodiment of this application;
FIG. 25 is a sectional view of an adapter according to an embodiment of this application;
FIG. 26 is a diagram of an application link of an optical cable connector according to an embodiment of this application;
FIG. 27 is a diagram of an internal link of a first main connection box according to an embodiment of this application;
FIG. 28 is a diagram of an internal link of a first extended connection box according to an embodiment of this application; and
FIG. 29 is a diagram of an internal link of a fourth main connection box according to an embodiment of this application.

Reference numerals:
100-Connector; 110-Main housing; 111-First end; 101-Crimping ring;
112-Second end; 113-First accommodation cavity; 114-Second limiting portion;
115: First limiting block; 116: third limiting portion; 1161: Fourth groove;
117-Third groove; 118-Second limiting block; 119-Third limiting block;
1101-Flange; 1102-Second limiting column; 1103-Elastic clamping portion;
120-Ferrule assembly; 121-Housing assembly; 1211-Second accommodation cavity;
1212-Front housing; 12121-First cavity; 121211-Isolation wall;
121212-Sub cavity; 12122-Sub front housing; 12123-Hole;
12124-Connecting rib; 12125-Sixth limiting portion; 12126-First groove;
1213-Rear housing; 12131-First clamping portion; 12132-Second clamping portion;
12133-Second cavity; 12134-Sub rear housing; 122-Ferrule structure;
1221-Ferrule; 12211-Through hole; 12212-Connecting portion;
12213-Plug-in portion; 12214-Fifth limiting portion; 123-Elastic component;
130-Connecting element; 131-First limiting portion; 132-First limiting slot;
133-Connecting hole; 140-Optical cable; 150-Base;
151-Connecting post; 152-Window; 153-Fourth limiting portion;
154-Second groove; 155-Third cavity; 156-Second limiting slot; 157-Shoulder portion;
160-Sleeve; 170-Lock cap; 171-Seventh limiting portion;
172-First Notch; 173-Sealing component;174-Limiting column; 175-Limiting platform;
176-Fourth limiting block; 177-Fifth limiting block; 1771-Gap; 180-Tail sleeve;
181-Third clamping portion; 190-Dust cap; 191-Dust cover;
200-Connection box; 210-Housing; 220-Adapter;
221-Positioning sleeve; 222-First connecting portion; 2221-Third end;
2222-Fourth end; 2223-First installation portion; 223-Second connecting portion;
2231-Second installation portion; 230-Nut component; 310-First main connection box;
311-First input end; 312-First output end; 313-Second output end;
314-Third output end; 315-Fourth output end; 320-Second main connection box;
330-Third main connection box; 340-Fourth main connection box; 341-Third input end;
342-Sixth output end; 343-Seventh output end; 344-Eighth output end;
410-First extended connection box; 411-Second input end; 412-Fifth output end; and
420-Second extended connection box.

### DESCRIPTION OF EMBODIMENTS

Terms used in embodiments of this application are only used to explain specific embodiments of this application, but are not intended to limit this application.

In optical distribution network engineering, a device, for example, an optical cross-connection box, an optical distribution box, or a fiber access terminal, usually matches an optical cable connector on an optical cable via an adapter on the device, to implement an interconnection between an optical fiber and a connection box. In a related technology, an optical cable connector usually includes a housing and a ferrule assembly and an optical cable that are located in the housing. The housing includes a first end and a second end that are opposite to each other. The ferrule assembly is located at one end of the housing and is connected to the housing. A part of the optical cable extends into the main housing from the second end of the housing, and is connected to the ferrule assembly at the first end of the main housing.

However, the optical cable connector may be pulled in a process of mating between the optical cable connector and the connection box and on-site arrangement of the optical cable connector and the connection box. In the foregoing optical cable connector, when the optical cable receives external pulling force, the external force is transferred to the optical cable in the housing, probably causing an optical fiber in the optical cable to be broken, and further the optical cable to be damaged. This affects normal working of the optical cable connector, and causes the optical cable connector to be less reliable and stable.

To resolve the foregoing problem, researchers improve a ferrule of the optical cable connector. A connecting element and the main housing are coupled to each other. In this way, when the optical cable receives external pulling force, the external force on the optical cable may be transferred to the main housing via the connecting element, to avoid transferring the external force to one end that is of the optical cable and that is connected to the ferrule assembly. This can effectively reduce/avoid generation of pulling force between one end of the optical cable located at the second end of the main housing and one end that is of the optical cable and that is connected to the ferrule assembly, avoid breakage of an optical fiber that is of the optical cable and that is located in the main housing due to the pulling force, and avoid adverse impact of breakage of the optical fiber on normal working of the optical cable connector, to effectively improve working reliability and stability of the optical cable connector.

The following clearly and completely describes technical solutions in embodiments of this application with reference to the accompanying drawings in embodiments of this application. It is clear that the described embodiments are some but not all of embodiments of this application. All other embodiments obtained by a person skilled in the art based on embodiments of this application without creative efforts shall fall within the protection scope of this application.

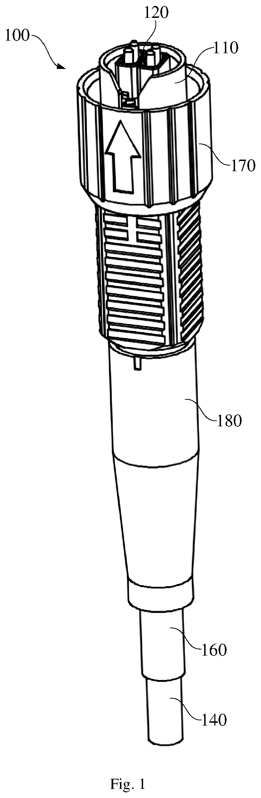

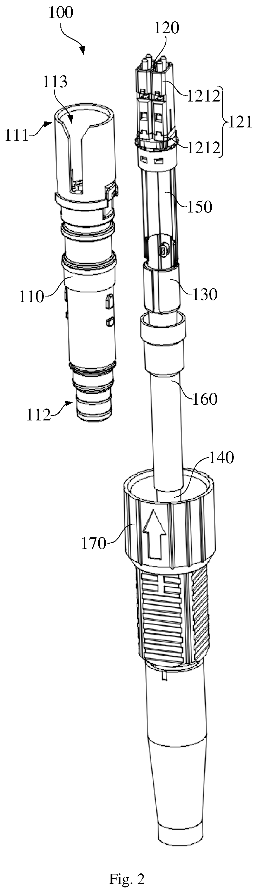

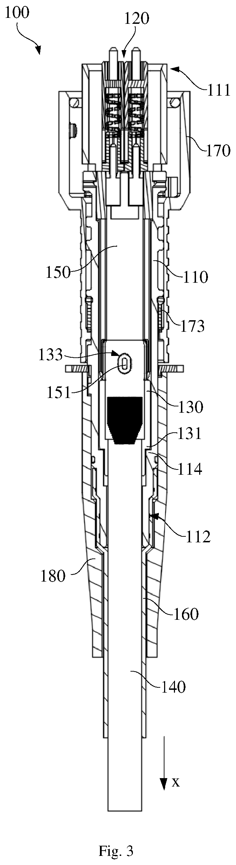

FIG. 1 is a diagram of a structure of an optical cable connector according to an embodiment of this application. FIG. 2 is an exploded view of an optical cable connector according to an embodiment of this application. FIG. 3 is a sectional view of an optical cable connector in a cross section according to an embodiment of this application.

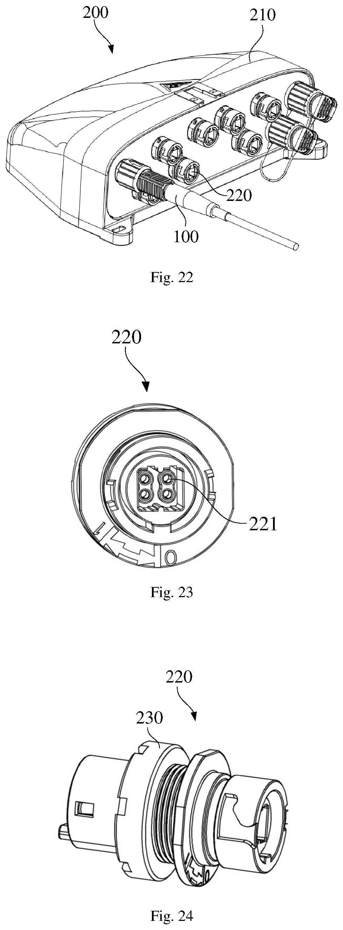

An embodiment of this application provides an optical cable connector 100. The optical cable connector 100 may be configured to mate a connection box 200 (with reference to FIG. 22 below), to implement signal transmission.

With reference to FIG. 1 and FIG. 2, the optical cable connector 100 may include a main housing 110, a ferrule assembly 120, a connecting element 130, and an optical cable 140. The main housing 110 may include a first end 111 and a second end 112 that are opposite to each other, and a first accommodation cavity 113 that runs through the first end 111 and the second end 112 may be provided in the main housing 110. With reference to FIG. 3, the ferrule assembly 120 may be located in the first accommodation cavity 113 of the main housing 110 and connected to the main housing 110, and the ferrule assembly 120 may be disposed close to the first end 111.

The connecting element 130 may be located in the first accommodation cavity 113 of the main housing 110, and disposed close to the second end 112 of the main housing 110. The connecting element 130 may be coupled to the main housing 110. For example, a limiting structure may be disposed on each of the connecting element 130 and the main housing 110, and the two limiting structures may match, so that the connecting element 130 and the main housing 110 can implement limiting and mating, to implement a coupling between the connecting element 130 and the main housing 110.

The optical cable 140 may partially extend through the connecting element 130 and be connected to the connecting element 130. For example, the optical cable 140 may be connected to the connecting element 130 through bonding or in another manner, to improve firmness and reliability of a connection between the optical cable 140 and the connecting element 130. One end that is of the optical cable 140 and that is located in the main housing 110 may be connected to the ferrule assembly 120. For example, a plurality of through holes 12211 may be provided in the ferrule assembly 120, the optical cable 140 may include a plurality of optical fibers, and the optical fibers may extend through the through holes 12211 respectively.

In a process of mating between the optical cable connector 100 and the connection box 200 (with reference to FIG. 22 below), the first end 111 of the main housing 110 may mate an adapter 220 (with reference to FIG. 22 below) on the connection box 200. For example, the first end 111 of the main housing 110 may be inserted into the adapter 220 (with reference to FIG. 22 below), so that the ferrule assembly 120 located at the first end 111 of the main housing 110 may mate the adapter 220 (with reference to FIG. 22 below), and an optical fiber in the ferrule assembly 120 may be interconnected to another optical fiber in the adapter, to implement optical signal transmission.

Compared with an optical cable connector solution in the related technology, in this embodiment of this application, the connecting element 130 is coupled to the main housing 110. In this way, when the optical cable 140 receives external pulling force, the external force on the optical cable 140 may be transferred to the main housing 110 via the connecting element 130, to avoid transferring the external force to one end that is of the optical cable 140 and that is connected to the ferrule assembly 120. This can effectively reduce/avoid generation of pulling force between one end that is of the optical cable 140 and that is located at the second end 112 of the main housing 110 and one end that is of the optical cable 140 and that is connected to the ferrule assembly 120, avoid breakage of an optical fiber that is of the optical cable 140 and that is located in the main housing 110 due to the pulling force, and avoid adverse impact of breakage of the optical fiber on normal working of the optical cable connector 100, to effectively improve reliability and stability of the optical cable connector 100.

The optical cable 140 may include a cable core and an outer sheath, and the outer sheath may be sleeved on the cable core. For example, the outer sheath may be aramid. The outer sheath may achieve a function of protecting the cable core, to reduce/avoid breakage of the optical cable 140. This helps improve tensile strength of the optical cable 140 and prolong a service life of the optical cable 140. The connecting element 130 may be sleeved on the outer sheath and bonded to the outer sheath. In this way, separation between the optical cable 140 and the connecting element 130 can be effectively reduced or avoided, and firmness and reliability of a connection between the optical cable 140 and the connecting element 130 can be effectively improved.

Still with reference to FIG. 3, a first limiting portion 131 may be provided on the connecting element 130, and a second limiting portion 114 may be provided on the main housing 110. The first limiting portion 131 may abut against the second limiting portion 114, and a coupling relationship may be formed between the connecting element 130 and the main housing 110 when the first limiting portion 131 abuts against the second limiting portion 114.

When a part that is of the optical cable 140 and that is located outside the main housing 110 receives external pulling force, because the optical cable 140 is connected to the connecting element 130, the external force may be transferred to the connecting element 130 via a part that is of the optical cable 140 and that is located at the second end 112 of the main housing 110, and the force may be transferred between the connecting element 130 and the main housing 110 when the first limiting portion 131 abuts against the second limiting portion 114, to transfer the external force to the main housing 110. In this way, a case in which the external force is transferred to a part that is of the optical cable 140 and that is located at the first end 111 of the main housing 110 can be effectively reduced/avoided, and tension of the optical cable 140 inside the main housing 110 can be effectively reduced, to effectively avoid breakage of the optical cable 140, avoid adverse impact of breakage of the optical cable 140 on normal working of the optical cable connector 100, and effectively improve working stability and reliability of the optical cable connector 100.

Still with reference to FIG. 3, a pressing surface of the first limiting portion 131 may face the second end 112 of the main housing 110, and a pressing surface of the second limiting portion 114 may face the first end 111 of the main housing 110. For example, with reference to FIG. 3, the first limiting portion 131 may be disposed close to one side of the first end 111 of the main housing 110, and the second limiting portion 114 may be disposed close to the second end 112 of the main housing 110. In this way, when a part that is of the optical cable 140 and that is located outside the main housing 110 receives pulling force, the optical cable 140 drives the connecting element 130 to move toward the second end 112 of the main housing 110, that is, the connecting element 130 tends to move in an x direction in FIG. 3. In this case, the second limiting portion 114 of the main housing 110 may block the first limiting portion 131, to limit movement of the connecting element 130 toward the x direction, so as to transfer external force on the optical cable 140 to the main housing 110, and avoid a case in which a part that is of the optical cable 140 and that is located at the first end 111 of the main housing 110 is broken due to tensile force.

A mating surface between the first limiting portion 131 and the second limiting portion 114 may be perpendicular to an axial direction of the main housing 110. In this way, firmness of mating between the first limiting portion 131 and the second limiting portion 114 can be improved, and detachment between the first limiting portion 131 and the second limiting portion 114 can be effectively reduced or avoided, to avoid a case in which the detachment between the first limiting portion 131 and the second limiting portion 114 affects force transferring between the connecting element 130 and the main housing 110, and effectively improve stability of mating between the connecting element 130 and the main housing 110.

Still with reference to FIG. 3, the optical cable connector 100 may further include a base 150. The base 150 may be located in the first accommodation cavity 113 of the main housing 110. One end of the base 150 may be connected to the connecting element 130, and the other end may be connected to the ferrule assembly 120 and the main housing 110. The connecting element 130 may be connected to the ferrule assembly 120 via the base 150. The optical cable 140 may pass through the base 150 and be connected to the ferrule assembly 120. The base 150 may achieve a function of connecting the connecting element 130 and the ferrule assembly 120, so that the optical cable 140, the connecting element 130, and the ferrule assembly 120 may be assembled into an overall structure, to facilitate assembly with the main housing 110 and facilitate assembly and disassembly of the optical cable connector 100.

Still with reference to FIG. 3, the optical cable connector 100 may further include a sleeve 160. One end of the sleeve 160 may be sleeved at the second end 112 of the main housing 110 and connected to the main housing 110, and the other end may be sleeved on the optical cable 140 and connected to the optical cable 140. The optical cable 140 may be connected to the main housing 110 via the sleeve 160. In this way, when a part that is of the optical cable 140 and that is located outside the main housing 110 is pulled by external force, the optical cable 140 may further transfer the force to the main housing 110 via the sleeve 160, to reduce/avoid transferring the external force to the part that is of the optical cable 140 and that is located at the first end 111 of the main housing 110, so as to effectively reduce/avoid a case in which the optical cable 140 is broken due to the force on the part that is of the optical cable 140 and that is located at the first end 111 of the main housing 110.

For example, the sleeve 160 may be heat shrink tubing. For example, a size of the sleeve 160 may be large at the beginning, to facilitate sleeving the sleeve 160 on the main housing 110 and the optical cable 140. After the sleeve 160 is sleeved on the main housing 110 and the optical cable 140, the sleeve 160 may be heated, so that the sleeve 160 may shrink, to wrap the main housing 110 and the optical cable 140 tightly. In this way, detachment of the sleeve 160 from the main housing 110 and the optical cable 140 can be effectively reduced or avoided, and firmness and reliability of connections between the sleeve 160 and the main housing 110 and between the sleeve 160 and the optical cable 140 can be improved, to effectively improve reliability and stability of a connection between the optical cable 140 and the main housing 110.

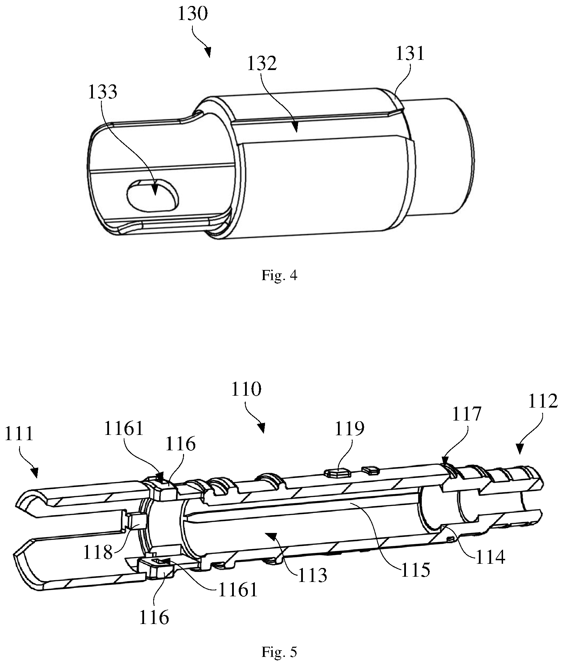

FIG. 4 is a diagram of a structure of a connecting element according to an embodiment of this application.

Still with reference to FIG. 3, a connecting post 151 may be disposed on one of the bases 150 and the connecting element 130. With reference to FIG. 4, a connecting hole 133 mating the connecting post 151 may be provided on the other of the base 150 and the connecting element 130. For example, the connecting post 151 may be disposed on the base 150, as shown in FIG. 3, and the connecting hole 133 may be provided on the connecting element 130, as shown in FIG. 4. The connecting post 151 may extend through the connecting hole 133, and the connecting element 130 and the base 150 may be connected through coordination between the connecting post 151 and the connecting hole 133. In this way, separation between the connecting element 130 and the base 150 can be reduced or avoided. This helps improve reliability and stability of a connection between the connecting element 130 and the base 150, and improve stability of an internal structure of the optical cable connector 100.

With reference to FIG. 4, the connecting element 130 may be of a tubular structure whose interior is hollow, two ends of the tubular structure are in communication, the optical cable 140 may pass through the tubular structure, and the optical cable 140 may be fixedly connected to the connecting element 130 through glue filling.

FIG. 5 is a sectional view of a main housing according to an embodiment of this application.

With reference to FIG. 4 and FIG. 5, a first limiting slot 132 may be provided on one of the connecting elements 130 and the main housing 110, and a first limiting block 115 that engages with the first limiting slot 132 may be provided on the other of the connecting element 130 and the main housing 110. For example, the first limiting slot 132 may be provided on the connecting element 130, as shown in FIG. 4, and the first limiting block 115 may be disposed on the main housing 110, as shown in FIG. 5. The first limiting block 115 may mate the first limiting slot 132, to limit relative rotation between the main housing 110 and the connecting element 130. Mating between the first limiting slot 132 and the first limiting block 115 may achieve a function of limiting assembly between the connecting element 130 and the main housing 110. For example, the first limiting slot 132 on the connecting element 130 may have an opening. In a process of assembling the connecting element 130 and the main housing 110, the first limiting block 115 on the main housing 110 may be inserted into the first limiting slot 132, and move along the first limiting slot 132 until the first limiting portion 131 on the connecting element 130 abuts against the second limiting portion 114 on the main housing 110. This indicates that the connecting element 130 is installed at an appropriate position. In this way, rotation of the connecting element 130 can be effectively reduced or avoided in the process of assembling the connecting element 130 and the main housing 110, and a case in which rotation of the connecting element 130 relative to the main housing 110 affects the normal assembly between the connecting element 130 and the main housing 110 can be reduced or avoided, to improve accuracy of mating between the connecting element 130 and the main housing 110.

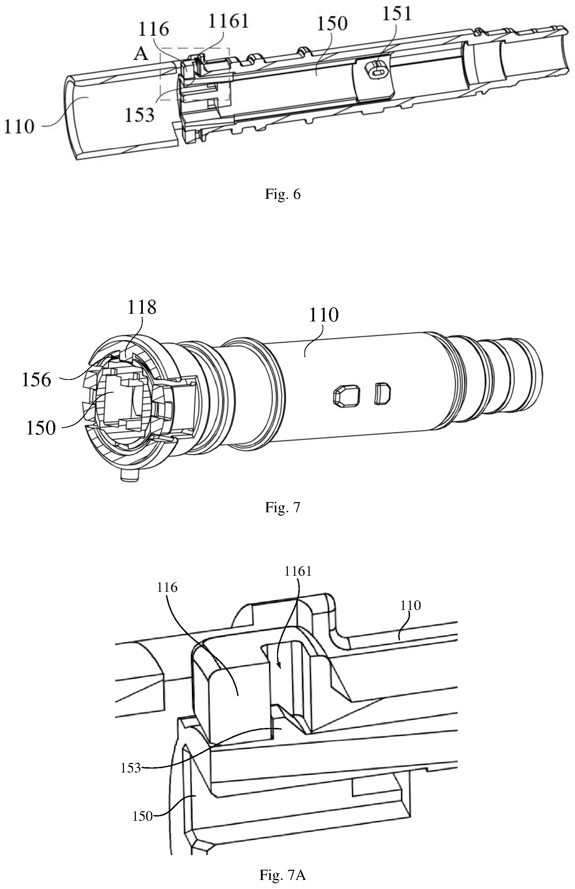

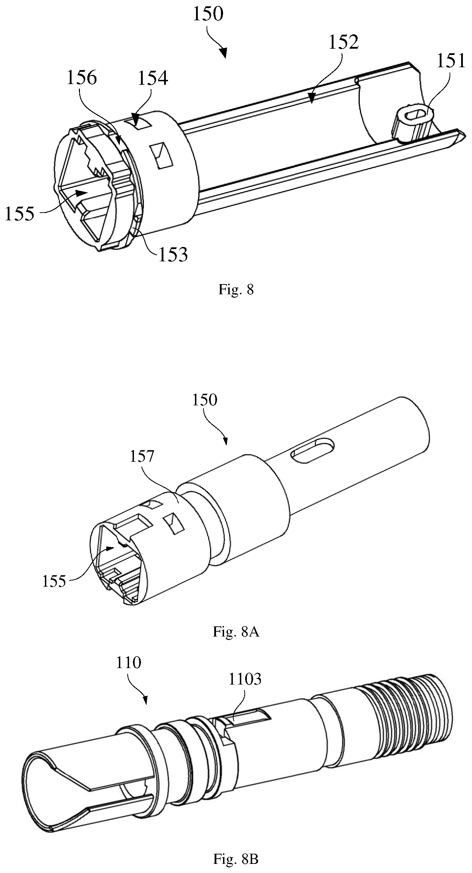

FIG. 6 is a sectional view of mating between a main housing and a base in a cross section according to an embodiment of this application. FIG. 7 is a sectional view of mating between a main housing and a base in another cross section according to an embodiment of this application. FIG. 7A is an enlarged view of an area A in FIG. 6. FIG. 8 is a diagram of a structure of a base according to an embodiment of this application.

Still with reference to FIG. 6, a third limiting portion 116 may be provided on an inner wall of the main housing 110, and a fourth limiting portion 153 that engages with the third limiting portion 116 may be provided on a periphery of the base 150. The fourth limiting portion 153 may mate the third limiting portion 116. For example, a fourth groove 1161 may be provided on the third limiting portion 116, and the fourth limiting portion 153 may be a protruding clamping portion. With reference to FIG. 7A, the fourth limiting portion 153 may be clamped in the fourth groove 1161 on the third limiting portion 116. Mating between the third limiting portion 116 and the fourth limiting portion 153 may provide positioning for the base 150 in an axial direction of the main housing 110, so that deviation of the base 150 in the axial direction of the main housing 110 can be reduced or avoided, to help improve stability and reliability of assembly between the base 150 and the main housing 110.

With reference to FIG. 7 and FIG. 8, a second limiting slot 156 may be further provided on the periphery of the base 150, and a second limiting block 118 may be disposed on the main housing 110. The second limiting block 118 may be clamped in the second limiting slot 156, and relative rotation between the base 150 and the main housing 110 may be limited through coordination between the second limiting slot 156 and the second limiting block 118, to improve accuracy of mating between the base 150 and the main housing 110 in a circumferential direction, and improve precision of assembly between the main housing 110 and the base 150.

Still with reference to FIG. 8, a window 152 may be further provided on the base 150. For example, a part of an upper part of the base 150 may be removed in a diameter direction of the base 150, to form the window 152 on the base 150. The window 152 may be opposite to the optical cable 140 in the main housing 110. A worker may observe a disposition status of the internal optical cable 140 through the window 152, to reduce/avoid damage to the optical cable 140 located inside the base 150, and avoid a case in which the damage to the optical cable 140 affects normal working of the optical cable connector 100.

FIG. 8A is a diagram of a structure of another base according to an embodiment of this application, and FIG. 8B is a diagram of a structure of another main housing according to an embodiment of this application. Alternatively, in another embodiment, referring to FIG. 8A, a shoulder portion 157 may be provided on an outer periphery of the base 150. Referring to FIG. 8B, an elastic clamping portion 1103 may be provided on the main housing 110, and the elastic clamping portion 1103 may abut against an end face of the shoulder portion 157. For example, the elastic clamping portion 1103 may face the inside of the main housing 110. In a process in which the base 150 passes through the main housing 110, when the elastic clamping portion 1103 abuts against the end face of the shoulder portion 157, it indicates that the main housing 110 and the base 150 reach a mating position. The mating between the shoulder portion 157 and the elastic clamping portion 1103 may implement limiting in an axial direction, so that channeling between the main housing 110 and the base 150 in the axial direction can be reduced or avoided. This helps improve reliability and stability of an axial connection between the main housing 110 and the base 150.

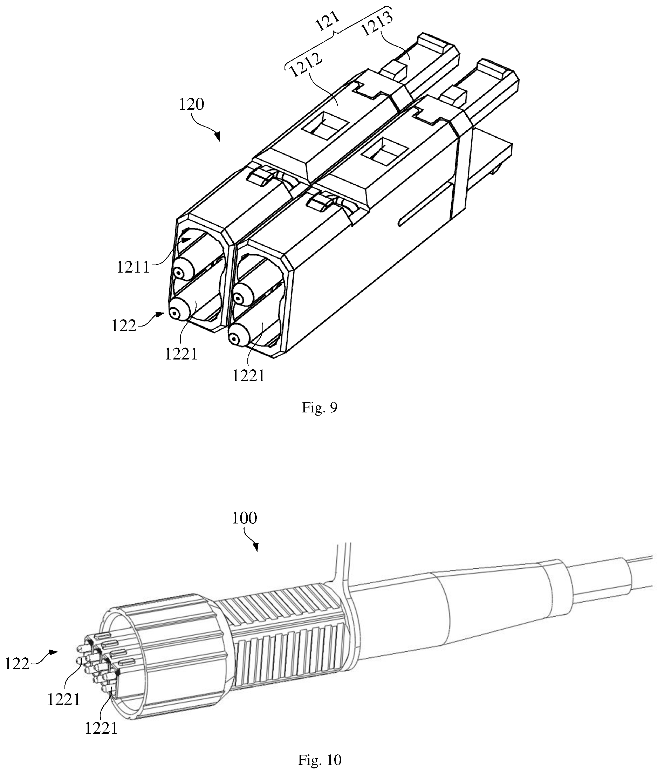

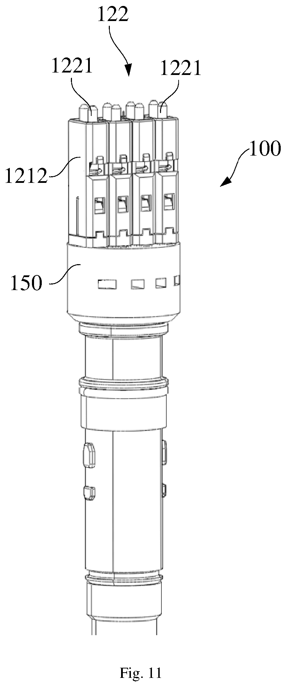

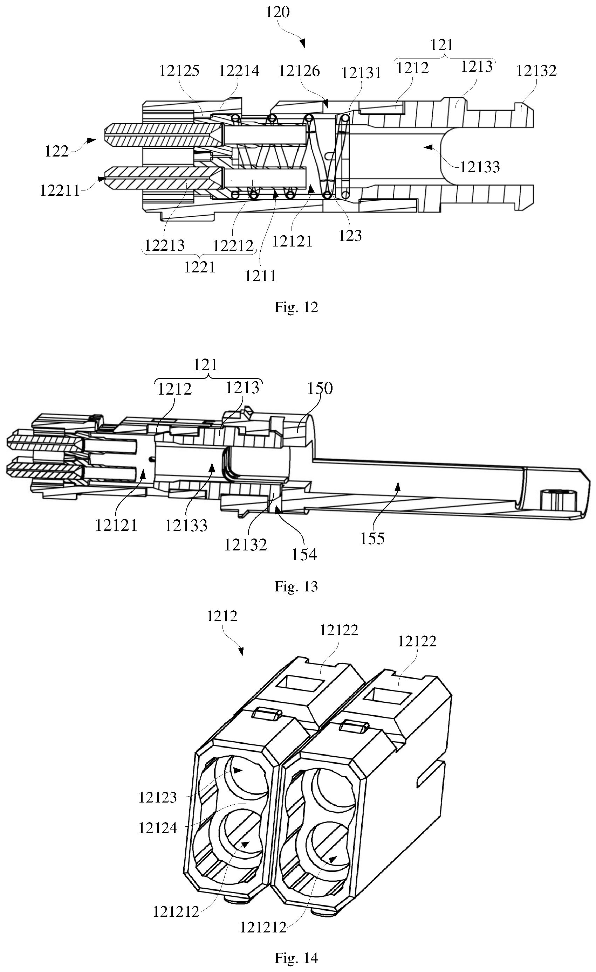

FIG. 9 is a diagram of a structure of a ferrule assembly according to an embodiment of this application. FIG. 10 is a diagram of a structure of an 8-core optical cable connector from a perspective according to an embodiment of this application. FIG. 11 is a diagram of a structure of an 8-core optical cable connector from another perspective according to an embodiment of this application. FIG. 12 is a sectional view of a ferrule assembly according to an embodiment of this application.

With reference to FIG. 9, in this embodiment of this application, the ferrule assembly 120 may include a housing assembly 121 and a ferrule structure 122. The housing assembly 121 may include a second accommodation cavity 1211. The ferrule assembly 120 may be located in the second accommodation cavity 1211. For example, the ferrule structure 122 may be disposed in a scalable manner relative to the housing assembly 121. The housing assembly 121 may be configured to mate the adapter on the connection box, and the ferrule structure 122 may be inserted into the adapter, to interconnect to the ferrule structure 122 at the other end of the adapter, to implement optical signal transmission. For example, when the optical cable connector 100 is not connected to the adapter, the ferrule structure 122 may extend relative to the housing assembly 121. When the optical cable connector 100 is connected to the adapter, the ferrule structure 122 may be inserted into a positioning sleeve 221 in the adapter, and abuts against the ferrule structure 122 at the other end. Under pressing force, the ferrule structure 122 may be retracted relative to the housing assembly 121.

The ferrule structure 122 in a retracted state tends to extend out of the housing assembly 121, so that the ferrule structure 122 can abut against the ferrule structure 122 at the other end of the adapter more tightly, tightness of mating between two groups of ferrule structures 122 can be effectively improved, and efficiency of optical signal transmission between the two groups of ferrule structures 122 is improved.

In this embodiment of this application, the ferrule structure 122 may include one or more ferrules 1221. A plurality of ferrules 1221 may be arranged in an array in M rows and N columns, where M≥2 and N≥2. For example, M may be equal to 2, 3, or 4, and a value of N may also be equal to 2, 3, or 4. For example, with reference to FIG. 9, in some examples, M may be equal to 2, N may also be equal to 2, and four ferrules 1221 may be arranged in an array in two rows and two columns, as shown in FIG. 9. Alternatively, in some other examples, with reference to FIG. 10 and FIG. 11, M may be equal to 2, N may be equal to 4, and eight ferrules 1221 may be arranged in an array in two rows and four columns, as shown in FIG. 10. In this way, a quantity of ferrules 1221 in the optical cable connector 100 can be effectively increased, to effectively increase a quantity of transmitted signals of the optical cable connector 100.

With reference to FIG. 12, the ferrule assembly 120 may further include an elastic component 123. The elastic component 123 may be located in the second accommodation cavity 1211 of the housing assembly 121. One end of the elastic component 123 may abut against an inner wall of the second accommodation cavity 1211, and the other end may be connected to the ferrule structure 122. The elastic component 123 may provide an elastic buffer between the ferrule structure 122 and the housing assembly 121, to reduce/avoid rigid impact between the ferrule structure 122 and the housing assembly 121, avoid a case in which rigid contact between the ferrule structure 122 and the housing assembly 121 affects tightness of a connection between the ferrule structure 122 and the housing assembly 121, and help improve firmness of the connection between the ferrule structure 122 and the housing assembly 121.

In a process in which the optical cable connector 100 is connected to the adapter on the connection box, the two ferrule structures 122 are interconnected in the adapter. The ferrule structure 122 may generate squeezing force on the elastic component 123 under interconnection force of the other ferrule structure 122, so that the elastic component 123 is in a compressed state. The elastic component 123 in the compressed state has resilient force, and the resilient force may drive the ferrule structure 122 to squeeze toward a direction of the other ferrule structure 122. In this way, the two ferrule structures 122 can be closely attached to each other, and stability of an interconnection between the two ferrule structures 122 can be effectively improved, to effectively improve efficiency of optical signal transmission.

Still with reference to FIG. 12, a through hole 12211 may be provided on each ferrule 1221, the optical cable 140 may include a plurality of optical fibers, and the plurality of optical fibers may extend through the through holes 12211 of the ferrules 1221 respectively. In a process in which the optical cable connector 100 is interconnected to the adapter, ferrules 1221 in two optical cable connectors 100 may be interconnected, so that optical fibers in the ferrules 1221 may be interconnected, to implement optical signal transmission.

The at least two ferrules 1221 may be connected to one elastic component 123. For example, two ferrules 1221 may be connected to one elastic component 123, or three or more ferrules 1221 may be connected to one elastic component 123. Compared with a disposition manner in which one elastic component is disposed on one ferrule, this can effectively reduce a quantity of elastic components 123 in the optical cable connector 100, reduce space occupied by the elastic components 123 in the optical cable connector 100, and help improve a miniaturization design of the optical cable connector 100.

In addition, compared with a case in which one elastic component is disposed on one ferrule, interference between two adjacent elastic components 123 can be further reduced by connecting the at least two ferrules 1221 and one elastic component 123, so that the elastic component 123 can be disposed in the housing assembly 121. In addition, the at least two ferrules 1221 are connected to one elastic component 123. In this way, in an extending and shrinking process of several ferrules 1221 disposed on a same elastic component 123 relative to the housing assembly 121, the ferrules 1221 may further have a good synchronization rate, so that evenness of extending and shrinking of the ferrules 1221 can be improved, to effectively improve stability of mating between the optical cable connector 100 and the adapter.

The elastic component 123 may be a spring, and the spring may be sleeved outside the ferrule structure 122. For example, more than two ferrules 1221 may extend through in one spring, to reduce a quantity of springs, so as to improve a miniaturization design of the optical cable connector 100.

Still with reference to FIG. 12, the housing assembly 121 may include a front housing 1212 and a rear housing 1213. A first cavity 12121 may be provided on the front housing 1212, and the rear housing 1213 may at least partially extend into the first cavity 12121 of the front housing 1212 and be connected to the front housing 1212. Each ferrule 1221 may include a connecting portion 12212 and a plug-in portion 12213. The connecting portion 12212 may be connected to the plug-in portion 12213. The connecting portion 12212 may be located in the first cavity 12121, and the plug-in portion 12213 may extend out of a front end of the front housing 1212, to interconnect to the adapter. The elastic component 123 may be sleeved on the connecting portion 12212 of the ferrule 1221, one end of the elastic component 123 may be connected to the ferrule 1221, and the other end may be connected to the rear housing 1213.

For example, one end of the elastic component 123 may abut against the ferrule 1221, and the other end may abut against the rear housing 1213. The elastic component 123 may be in a compressed state between the ferrule 1221 and the rear housing 1213, so that the elastic component 123 can generate pressing force on the ferrule 1221, and the ferrule 1221 can be more closely connected to another ferrule in a process of mating the adapter.

Still with reference to FIG. 12, a fifth limiting portion 12214 may be provided at one end that is of the connecting portion 12212 of the ferrule 1221 and that is close to the plug-in portion 12213, and a sixth limiting portion 12125 that engages with the fifth limiting portion 12214 may be provided inside the front housing 1212. One end of the fifth limiting portion 12214 may abut against the fifth limiting portion 12214, and the other end may abut against the elastic component 123. The sixth limiting portion 12125 and the fifth limiting portion 12214 may achieve a limiting and blocking function, so that detachment of the ferrule 1221 from the front end of the front housing 1212 can be avoided. This helps improve stability and reliability of disposing the ferrule 1221 in the front housing 1212.

In a process in which the ferrule 1221 matches the adapter, the ferrule 1221 may move toward a direction of the elastic component 123 under a squeezing effect of a ferrule 1221 in another optical cable connector 100, and a squeezing effect is generated on the elastic component 123 via the fifth limiting portion 12214, so that the elastic component 123 is in a compressed state, and the elastic component 123 in the compressed state may have resilient force, so that the elastic component 123 may generate pressing force on the ferrule 1221. In this way, the ferrule 1221 can be more closely interconnected to another ferrule 1221 in a process of mating the adapter.

Still with reference to FIG. 12, a first groove 12126 may be provided on the front housing 1212, and a first clamping portion 12131 that engages with the first groove 12126 may be provided on the rear housing 1213. The first clamping portion 12131 may be clamped in the first groove 12126, so that the front housing 1212 and the rear housing 1213 may be connected through coordination between the first clamping portion 12131 and the first groove 12126. The connection is reliable, the structure is simple, and the operation is convenient. In this way, detachment between the front housing 1212 and the rear housing 1213 can be effectively avoided, and reliability and firmness of a connection between the front housing 1212 and the rear housing 1213 can be improved. In addition, this further helps improve efficiency of assembly between the front housing 1212 and the rear housing 1213, and improve production efficiency of the optical fiber connector 100.

Alternatively, in some examples, disposition positions of the first groove 12126 and the first clamping portion 12131 may be exchanged. For example, the first groove 12126 may be disposed on the rear housing 1213, the first clamping portion 12131 may be disposed on the front housing 1212, and a connection between the front housing 1212 and the rear housing 1213 is implemented through coordination between the first clamping portion 12131 and the first groove 12126.

FIG. 13 is a sectional view of mating between a housing assembly and a base according to an embodiment of this application.

With reference to FIG. 13, a second cavity 12133 connected to the first cavity 12121 may be provided on the rear housing 1213, and a third cavity 155 in communication with the second cavity 12133 may be provided on the base 150. The optical fibers in the optical cable 140 may sequentially pass through the third cavity 155 of the base 150 and the second cavity 12133 of the rear housing 1213, and pass through the through holes 12211 of the ferrules 1221 respectively. In this way, the optical fiber may be interconnected to the optical fiber in the optical cable connector 100 at the other end of the adapter via the ferrule 1221, to implement optical signal transmission.

Still with reference to FIG. 13, a second clamping portion 12132 may be provided at one end that is of the rear housing 1213 and that is away from the front housing 1212, and a second groove 154 that engages with the second clamping portion 12132 may be provided on the base 150. The second clamping portion 12132 may be clamped in the second groove 154. For example, the second clamping portion 12132 and the first clamping portion 12131 may be disposed opposite to each other. One end of the rear housing 1213 may be connected to the front housing 1212 via the first clamping portion 12131, and the other end may be connected to the base 150 via the second clamping portion 12132, so that the housing assembly 121 is connected to the rear housing 1213. In this way, firmness and reliability of connections between the front housing 1212, the rear housing 1213, and the base 150 can be improved, and detachment of the base 150 from the rear housing 1213 and the front housing 1212 can be effectively avoided. This helps improve overall structural stability of an internal component of the optical cable connector 100.

Disposition positions of the second groove 154 and the second clamping portion 12132 may alternatively be exchanged. For example, the second groove 154 may be disposed on the rear housing 1213, and the second clamping portion 12132 may be disposed on the base 150, so that the rear housing 1213 and the base 150 can still be connected through coordination between the second clamping portion 12132 and the second groove 154.

FIG. 14 is a diagram of a structure of a front housing according to an embodiment of this application.

With reference to FIG. 14, in a possible implementation, the front housing 1212 may include M sub front housings 12122, the M sub front housings 12122 may be sequentially connected in a direction from a first row to an M^{th} row, one first cavity 12121 may be provided on each sub front housing 12122, one elastic component 123 may be provided in each first cavity 12121, and N ferrules 1221 may extend through each elastic component 123. In this way, the ferrules 1221 may be arranged in M rows and N columns.

Alternatively, in some examples, the front housing 1212 may further include N sub front housings 12122. The N sub front housings 12122 may be sequentially connected in a direction from a first column to an N^{th} column. One first cavity 12121 may be provided on each sub front housing 12122, one elastic component 123 may be provided in each first cavity 12121, and M ferrules 1221 may extend through each elastic component 123. In this way, the ferrules 1221 may still be arranged in M rows and N columns.

For example, when the ferrules 1221 are arranged in two rows and two columns, that is, M is equal to 2, and N is equal to 2, the front housing 1212 may include two sub front housings 12122, as shown in FIG. 14. The two sub front housings 12122 may be sequentially connected in a direction from a first column to a second column. In addition, one elastic component 123 may be provided in each sub front housing 12122, and two ferrules 1221 may be provided in each elastic component 123, so that the ferrules 1221 may be arranged in two rows and two columns.

The front housing 1212 includes a plurality of sub front housings 12122 that are independent of each other and that are connected to each other, and each sub front housing 12122 may be produced independently of each other, and then assembled and connected to the rear housing 1213. In this way, independence of disposing the sub front housings 12122 can be improved. In addition, a quantity of combinations of the sub front housings 12122 is changed, so that the ferrules 1221 in the front housing 1212 can be arranged in a plurality of different manners, to effectively improve flexibility of disposing the ferrules 1221.

Still with reference to FIG. 14, a plurality of holes 12123 that allow the ferrules 1221 to pass through may be provided on a side that is of the front housing 1212 and that faces the first end 111 of the main housing 110, and each ferrule 1221 may pass through the hole 12123. A connecting rib 12124 may be provided between two adjacent holes 12123. The connecting rib 12124 may separate two adjacent ferrules 1221, to reduce/avoid mutual interference between the two adjacent ferrules 1221, and help improve overall structural stability of the optical cable connector 100.

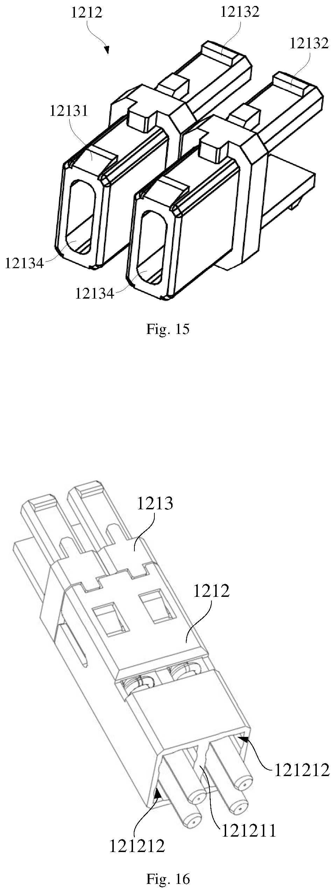

FIG. 15 is a diagram of a structure of a rear housing according to an embodiment of this application.

Correspondingly, the rear housing 1213 may also include a plurality of sub rear housings 12134, and a quantity of sub rear housings 12134 may be the same as a quantity of sub front housings 12122. In addition, the sub rear housings 12134 may be connected to the sub front housings 12122 respectively, to form a housing assembly 121, so as to install and fasten the ferrules 1221. For example, with reference to FIG. 15, the rear housing 1213 may also include two sub rear housings 12134, and the two sub rear housings 12134 may be connected to the two sub front housings 12122 respectively.

FIG. 16 is a diagram of a structure of another front housing according to an embodiment of this application.

Alternatively, in another possible implementation, with reference to FIG. 16, the front housing 1212 may be of an integrated structure. An isolation wall 121211 may be disposed in the first cavity 12121 of the front housing 1212. The isolation wall 121211 may divide the first cavity 12121 of the front housing 1212 into M sub cavities 121212. The M sub cavities 121212 may be sequentially connected in a direction from a first row to an M^{th} row. One elastic component 123 may be provided in each sub cavity 121212, and N ferrules 1221 may extend through each elastic component 123, so that the ferrules 1221 may be arranged in M rows and N columns.

Alternatively, in some examples, the isolation wall 121211 in the first cavity 12121 may further divide the first cavity 12121 of the front housing 1212 into N sub cavities 121212. The N sub cavities 121212 may be sequentially connected in a direction from a first column to an N^{th} column. One elastic component 123 may be provided in each sub cavity 121212, and M ferrules 1221 may extend through each elastic component 123, so that the ferrules 1221 can still be arranged in M rows and N columns.

For example, with reference to FIG. 16, the isolation wall 121211 may isolate the first cavity 12121 of the front housing 1212 into two sub cavities 121212. The two sub cavities 121212 may be arranged in a direction from a first column to a second column. Two ferrules 1221 may be provided in each sub cavity 121212, so that the ferrules 1221 may be arranged in two rows and two columns.

The front housing 1212 is of an integrated structure. In this way, there is a thickness of only one isolation wall 121211 between two adjacent sub cavities 121212, so that an isolation thickness between the two adjacent sub cavities 121212 can be effectively reduced, an overall size of the front housing 1212 can be effectively reduced, and a miniaturization design of the front housing 1212 can be improved, to effectively reduce an overall size of the optical cable connector 100 and implement a miniaturization design of the optical cable connector 100.

The rear housing 1213 may be of a split structure, or may be of an integrated structure. For example, when the front housing 1212 is of an integrated structure, the rear housing 1213 may include sub rear housings 12134 whose quantity is the same as a quantity of sub cavities 121212 of the front housing 1212, and the sub rear housings 12134 may be inserted into the sub cavities 121212 respectively, to connect to the front housing 1212. Alternatively, the rear housing 1213 may also be of an integrated structure. The rear housing 1213 may include sub cavities whose quantity is the same as a quantity of sub cavities 121212 in the front housing 1212. The sub cavities in the rear housing 1213 may be connected to the sub cavities 121212 in the front housing 1212 respectively, so that the optical fibers may sequentially pass through the rear housing 1213 and then extend into the ferrules 1221 in the front housing 1212.

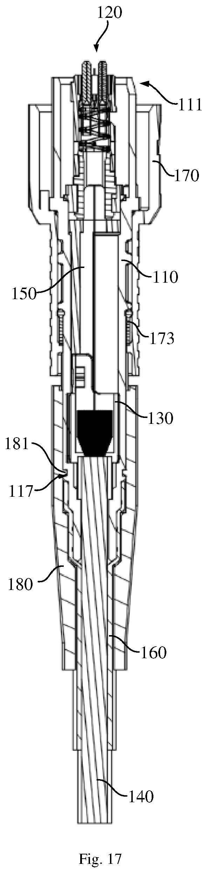

FIG. 17 is a sectional view of an optical cable connector in another cross section according to an embodiment of this application.

With reference to FIG. 17, the optical cable connector 100 may further include a lock cap 170, and the lock cap 170 may be sleeved at the first end 111 of the main housing 110 and rotate with and mate the main housing 110. The lock cap 170 may mate a structure on the adapter, so that the optical cable connector 100 may be connected to the adapter.

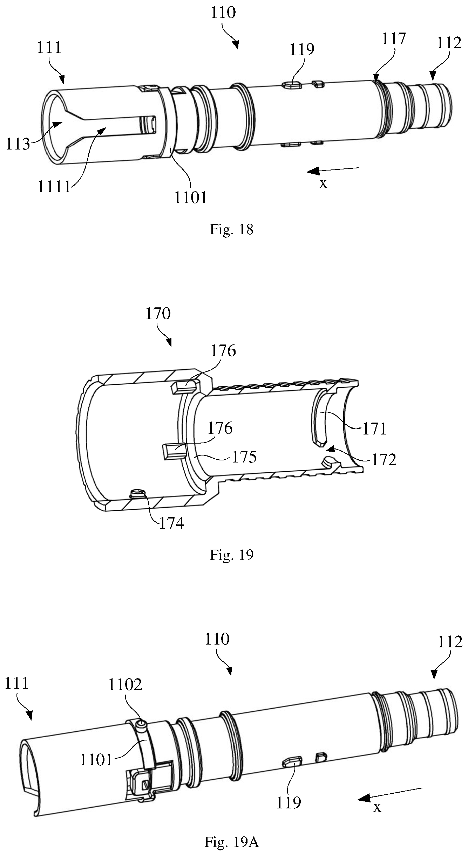

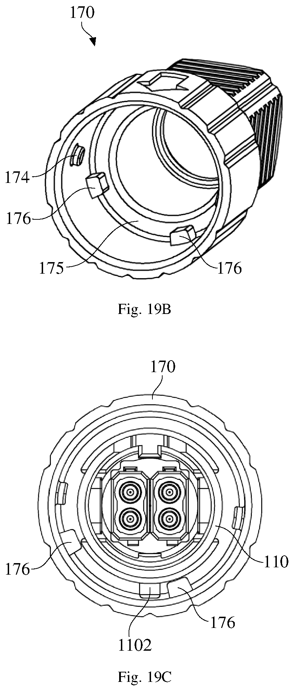

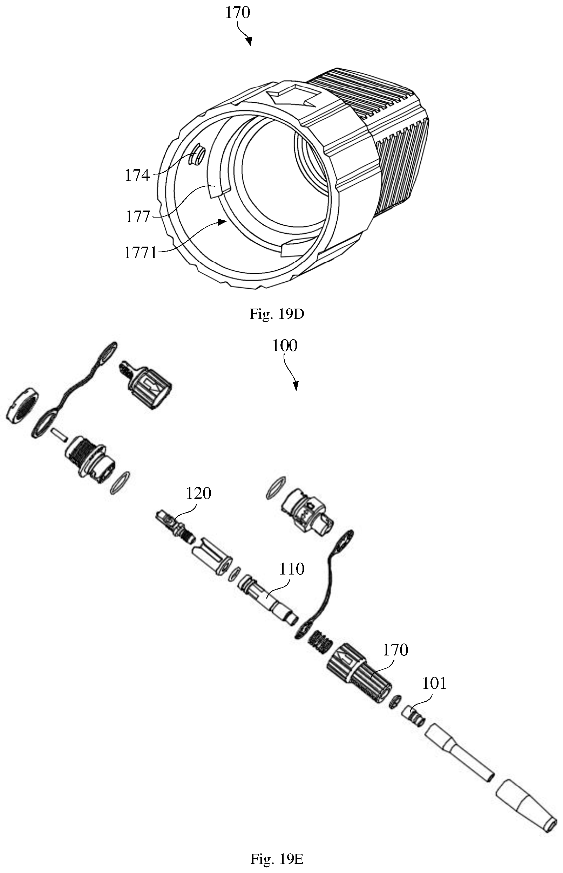

For example, a guide groove structure that engages with the main housing 110 may be provided on the adapter, the main housing 110 may be inserted into a guide groove, and the lock cap 170 may be sleeved outside the adapter. A first chute and a second chute that are connected may be provided on a periphery of the adapter. The first chute may extend in an axial direction of the adapter, and may extend to an end face of the adapter, and the second chute may extend in a circumferential direction of the adapter. A first limiting column 174 (with reference to FIG. 19) may be provided on an inner wall of the lock cap 170, and the first limiting column 174 on the lock cap 170 may mate the first chute and the second chute, so that the lock cap 170 may be connected to the adapter.

For example, the lock cap 170 may rotate in an extension direction of the first chute and the second chute, so that the first limiting column 174 on the lock cap 170 finally abuts against an end of the second chute. The second chute may achieve a function of limiting and fastening the first limiting column 174 in the axial direction, to avoid movement of the lock cap 170 in the axial direction of the adapter. This helps improve firmness and reliability of a connection between the optical cable connector 100 and the adapter, and improve stability of mating between two optical cable connectors 100.

Still with reference to FIG. 17, the optical cable connector 100 may further include a sealing component 173. The sealing component 173 may be located between the main housing 110 and the lock cap 170, and the sealing component 173 may provide sealing between the main housing 110 and the lock cap 170. In this way, a case in which external water stains, stains, and the like enter the main housing 110 through a gap between the lock cap 170 and the main housing 110 can be effectively reduced or avoided. This helps improve cleanness inside the main housing 110, and avoid a case in which water stains, stains, and the like enter the main housing 110, and affect stability of mating between the optical cable connector 100 and the adapter, and helps improve stability of optical signal transmission of the optical cable connector 100.

Still with reference to FIG. 17, the optical cable connector 100 may further include a tail sleeve 180. The tail sleeve 180 may be sleeved on the second end 112 of the main housing 110, and the tail sleeve 180 may be at least sleeved on the sleeve 160. The tail sleeve 180 may be made of a rubber material, and has specific elasticity. The tail sleeve 180 may provide elastic protection for the optical cable 140. In a bending process of the optical cable 140, the tail sleeve 180 may increase a bending radius of the optical cable 140, to avoid a case in which the optical cable 140 due to an excessively small bending radius, so as to avoid a case in which breakage of the optical cable 140 affects signal transmission between optical cable connectors 100.

Still with reference to FIG. 17, the front end of the ferrule assembly 120 may protrude from the first end 111 of the main housing 110. In this way, the end face of the ferrule assembly 120 can be easily cleaned, so as to reduce or avoid that dust or other stains falling into the front end of the ferrule assembly 120, and affect the cooperation between the ferrule assembly 120 and the optical fiber. This helps improve stability of signal transmission by the optical fiber in the ferrule assembly 120.

The first end 111 of the main housing 110 may protrude from the front end of the lock cap 170. In this way, the first end 111 of the main housing 110 can be reduced or avoided from being blocked by the lock cap 170. In a process in which the main housing 110 is connected to the adapter 220, cooperation between the main housing 110 and the adapter 220 can be easily observed, which helps improve accuracy of the cooperation between the main housing 110 and the adapter 220.

FIG. 18 is a diagram of a structure of a main housing according to an embodiment of this application.

Still with reference to FIG. 17 and FIG. 18, a third groove 117 may be provided on the main housing 110, and a third clamping portion 181 that engages with the third groove 117 may be provided on the tail sleeve 180. The third clamping portion 181 may be clamped in the third groove 117, and the tail sleeve 180 may be connected through coordination between the third clamping portion 181 and the third groove 117. The mating between the third clamping portion 181 and the third groove 117 can reduce/avoid separation between the tail sleeve 180 and the main housing 110. This helps improve reliability and stability of a connection between the main housing 110 and the tail sleeve 180, and improve overall structural stability of the optical cable connector 100.

Disposition positions of the third groove 117 and the third clamping portion 181 may alternatively be exchanged. For example, the third groove 117 may be provided on the tail sleeve 180, and the third clamping portion 181 may be disposed on the main housing 110, so that the main housing 110 and the tail sleeve 180 can still be connected through coordination between the third clamping portion 181 and the third groove 117.

Alternatively, in some examples, the tail sleeve 180 may be connected to the main housing 110 through bonding, a threaded connection, or in another manner.

FIG. 19 is a sectional view of a lock cap according to an embodiment of this application.

Referring to FIG. 18, a third limiting block 119 may be disposed on one of the main housing 110 and the lock cap 130. With reference to FIG. 19, a seventh limiting portion 171 may be disposed on the other of the main housing 110 and the lock cap 130, and the seventh limiting portion 171 may be disposed along a circumferential direction of the main housing 110 or the lock cap 130. A first notch 172 may be disposed on the seventh limiting portion 171, and the first notch 172 may be used for the third limiting block 119 to pass through.

For example, when the third limiting block 119 is aligned with the first notch 172 on the seventh limiting portion 171, the lock cap 130 may be detached from the main housing 110, so that the lock cap 130 is separated from the main housing 110. On the contrary, when the third limiting block 119 is not aligned with the first notch 172 on the seventh limiting portion 171, the seventh limiting portion 171 may limit and block the third limiting block 119, so as to prevent the lock cap 130 from moving in the axial direction of the main housing 110. When the lock cap 130 is assembled with the main housing 110, the worker may align the third limiting block 119 with the first notch 172, so as to prevent the seventh limiting portion 171 from blocking the third limiting block 119, and the lock cap 130 may be assembled on the main housing 110. After the third limiting block 119 passes through the first notch 172, the lock cap 130 may be rotated, so that the third limiting block 119 is misaligned with the first notch 172, and the seventh limiting portion 171 may block the third limiting block 119, thereby preventing the lock cap 130 from being detached from the main housing 110, and completing assembly between the lock cap 130 and the main housing 110.

When the lock cap 130 needs to be removed from the main housing 110, the lock cap 130 may be rotated, and it is observed that the third limiting block 119 is aligned with the first notch 172, so that the seventh limiting portion 171 loses a limiting function on the third limiting block 119, and the lock cap 130 is detached from the main housing 110, thereby completing disassembly between the lock cap 130 and the main housing 110.

The third limiting block 119 is disposed on one of the main housing 110 and the lock cap 130, and the seventh limiting portion 171 having the first notch 172 is disposed on the other. In this way, when the lock cap 130 needs to be assembled or disassembled with the main housing 110, the third limiting block 119 may be aligned with the first notch 172, so as to facilitate installation and disassembly between the lock cap 130 and the main housing 110. In addition, the third limiting block 119 and the first notch 172 are staggered by rotating the lock cap 130, so that the seventh limiting portion 171 can limit and block the third limiting block 119, thereby preventing the lock cap 130 from being detached from the main housing 110, and effectively improving overall structural stability of the optical cable connector 100.

With reference to FIG. 18, a third limiting block 119 may be provided on an outer side of the main housing 110. With reference to FIG. 5 and FIG. 19, a seventh limiting portion 171 may be disposed on an inner wall of the lock cap 170, the seventh limiting portion 171 may be disposed on a periphery of the inner wall of the lock cap 170, a first notch 172 may be provided on the seventh limiting portion 171, and the first notch 172 may be used for the third limiting block 119 on the main housing 110 to pass through. When the third limiting block 119 on the main housing 110 is aligned with the first notch 172, the main housing 110 may be detached from the lock cap 170. On the contrary, when the limiting block on the main housing 110 is not aligned with the first notch 172 on the seventh limiting portion 171, the seventh limiting portion 171 may achieve a function of limiting and blocking the third limiting block 119, to avoid movement of the main housing 110 in an axial direction of the lock cap 170. In this way, a case in which the main housing 110 is detached from the lock cap 170 in a process of using the optical cable connector 100 can be effectively reduced or avoid, stability of mating between the main housing 110 and the lock cap 170 can be effectively improved, and overall structural stability of the optical cable connector 100 can be improved.

When needing to remove the lock cap 170 from the main housing 110, a worker may rotate the lock cap 170, so that the third limiting block 119 is aligned with the first notch 172, the seventh limiting portion 171 does not achieve a function of limiting the third limiting block 119, and the lock cap 170 is removed from the main housing 110.

Still referring to FIG. 18, an opening groove 1111 may be disposed on the first end 111 of the main housing 110, and the opening groove 1111 may extend from an end of the main housing 110 along an axial direction of the main housing 110. The opening groove 1111 may mates with the positioning key on the adapter 220. For example, the adapter 220 may have a slot, and the positioning key may be disposed in the slot. In a process in which the main housing 110 mates with the adapter 220, the main housing 110 may be inserted into the slot, and the positioning key in the slot may be clamped into the opening groove 1111 of the main housing 110. The cooperation between the opening groove 1111 and the positioning key may provide circumferential limiting for the cooperation between the main housing 110 and the adapter 220, so as to avoid relative rotation between the main housing 110 and the adapter 220, and prevent the main housing 110 from rotating relative to the adapter 220 in a tightening process of the lock cap 170, thereby effectively improving reliability of the lock cap 170.

For example, the end of the opening groove 1111 may also be in a horn shape, so that the positioning key on the adapter 220 can be conveniently inserted into the opening groove 1111.

Still referring to FIG. 18, a flange 1101 may be further disposed on the outer circumference of the main housing 110. Referring to FIG. 19, a limiting platform 175 may be disposed on an inner wall of the lock cap 170, and the flange 1101 may abut against the limiting platform 175. In a process of assembling the main housing 110 and the lock cap 170, the lock cap 170 is sleeved on the main housing 110 from the second end 112 of the main housing 110 along the x direction in FIG. 18. When the limiting platform 175 on the lock cap 170 abuts against the flange 1101 on the main housing 110, it indicates that the lock cap 170 is moved to a proper position in the axial direction of the main housing 110. In this case, the movement of the lock cap 170 in the axial direction of the main housing 110 may be stopped, and then the lock cap 170 is rotated, so that the first limiting block 115 is misaligned with the first notch 172.

The cooperation between the limiting platform 175 and the flange 1101 may provide axial positioning for assembly between the main housing 110 and the lock cap 170, so that a deviation between the lock cap 170 and the main housing 110 during assembly can be reduced or avoided, thereby effectively improving assembly precision between the main housing 110 and the lock cap 170.

The opening groove 1111 may extend to a position close to the flange 1101. In this way, a length of the opening groove 1111 can be increased, to ensure sufficient interconnection between the main housing 110 and the adapter.

Referring to FIG. 3, the lock cap 170 may be located at the first end 111 of the main housing 110. When the third limiting block 119 is located on the outer side of the main housing 110, and the seventh limiting portion 171 is located on the inner wall of the lock cap 170, the seventh limiting portion 171 may be located on a side of the third limiting block 119 facing the first end 111 of the main housing 110. For example, referring to FIG. 3, in a process of assembling the main housing 110 and the lock cap 170, the lock cap 170 may be sleeved on the main housing 110 from the second end 112 of the main housing 110 along the x direction in the figure, and then the third limiting block 119 on the main housing 110 passes through the first notch 172 on the inner wall of the lock cap 170, and the seventh limiting portion 171 is located on a side of the third limiting block 119 facing the first end 111 of the main housing 110.

In this way, in a process of using the optical cable connector 100, the third limiting block 119 may limit and resist the seventh limiting portion 171, so that the lock cap 170 can be effectively prevented from moving relative to the main housing 110 in a reverse direction of the x direction in the figure, and the lock cap 170 can be prevented from being detached from the main housing 110, thereby effectively improving structural stability of the optical cable connector 100.

FIG. 19A is a schematic structural diagram of a main housing from another perspective according to an embodiment of this application. FIG. 19B is a schematic structural diagram of a lock cap according to an embodiment of this application. FIG. 19C is a schematic structural diagram of a main housing and a lock cap working together according to an embodiment of this application.

Still referring to FIG. 19A and FIG. 19B, two fourth limiting blocks 176 may be disposed on one of the main housing 110 and the lock cap 170, and the two fourth limiting blocks 176 may be disposed at intervals in a circumferential direction. A second limiting column 1102 may be disposed on the other of the main housing 110 and the lock cap 170. With reference to FIG. 19C, the second limiting column 1102 may be located between the two fourth limiting blocks 176, and the second limiting column 1102 can rotate within an angle range defined by the two fourth limiting blocks 176.

The two fourth limiting blocks 176 may limit the second limiting column 1102, so that the second limiting column 1102 rotates in space formed by the two fourth limiting blocks 176, and the lock cap 170 and the main housing 110 are driven to rotate within a specified angle range. In this way, in a process of connecting the optical cable connector 100 to the adapter, the lock cap 170 is sleeved on the adapter, and the locking block 136 on the lock cap 170 enters the locking slot on the adapter. The lock cap 170 rotates relative to the main housing 110 by any angle, and the locking block 136 can enter the locking slot from the opening of the locking slot. This can effectively reduce or avoid a case in which the locking block 136 cannot be connected to the locking slot because the lock cap 170 rotates by an excessively large angle, and help improve accuracy of connecting the locking block 136 to the locking slot.

For example, referring to FIG. 19A and FIG. 19B, the second limiting rod 1102 may be located on the main housing 110. For example, the second limiting rod 1102 may be located on an outer wall of the flange 1101, and the two fourth limiting blocks 176 may be located on an inner wall of the lock cap 170. In addition, the two fourth limiting blocks 176 may be disposed along a circumferential direction of the lock cap 170. The second limiting rod 1102 located on the flange 1101 may rotate within an angle range defined by the two fourth limiting blocks 176, to limit a rotation range of the lock cap 170, so that the locking block 136 on the lock cap 170 can smoothly enter the locking slot on the adapter.

Alternatively, in some examples, the second limiting rod 1102 may be further located on an inner wall of the lock cap 170, and the two fourth limiting blocks 176 may be located on the main housing 110. For example, the two fourth limiting blocks 176 may be located on an outer wall of the flange 1101. The second limiting rod 1102 located on the lock cap 170 may rotate within an angle range defined by the two fourth limiting blocks 176, to limit a rotation range of the lock cap 170, so that the locking block 136 on the lock cap 170 can smoothly enter the locking slot on the adapter.

FIG. 19D is a schematic structural diagram of another lock cap according to an embodiment of this application.

In another possible implementation, referring to FIG. 19D, a fifth limiting block 177 may be further disposed on the inner wall of the lock cap 170. The fifth limiting block 177 may be disposed along a circumferential direction of the lock cap 170, and there is a spacing 1771 between a first end and an end of the fifth limiting block 177. The second limiting rod 1102 on the flange 1101 may be located in the spacing 1771 between the first end and the end of the fifth limiting block 177, and the second limiting rod 1102 may rotate within an angle range defined by the first end and the end of the fifth limiting block 177.

The first end and the end of the fifth limiting block 177 may limit the second limiting rod 1102, so that the lock cap 170 can rotate within a specified range, and the locking block 136 on the lock cap 170 can smoothly enter the locking slot on the adapter.

Alternatively, in still another possible implementation, a second notch (not shown in the figure) may be disposed on the flange 1101, and a third limiting rod (not shown in the figure) may be disposed on the lock cap 170. The third limiting rod may be located in the second notch, and the third limiting rod may rotate within an angle range defined by the notch. In this way, the lock cap 170 can rotate relative to the main housing 110 within a specified range, so that the locking block 136 on the lock cap 170 can smoothly enter the locking slot on the adapter.

In this embodiment of this application, the main housing 110 may be of an integrated structure. For example, the main housing 110 may be integrally formed by means of injection molding, stamping, or the like, so that the main housing 110 becomes an integrated structure. This can improve firmness and reliability of the structure of the main housing 110, and help improve overall structural stability and reliability of the optical cable connector 100.

FIG. 19E is an exploded view of another optical cable connector according to an embodiment of this application.

Referring to FIG. 19E, in a possible implementation, the optical cable connector 100 may include a crimping ring 101. The crimping ring 101 may be sleeved on the optical cable 140 and connected to the optical cable 140. The crimping ring 101 may further be sleeved on the second end 112 of the main housing 110. The crimping ring 101 may be configured to press the optical cable 140 tightly against the main housing 110. For example, the crimping ring 101 may be crimped on the optical cable 140 in a mechanical crimping manner, and then crimped on the main housing 110, so that the optical cable 140 may be connected to the main housing 110 by using the crimping ring 101. This can improve firmness and reliability of a connection between the optical cable 140 and the main housing 110, and help improve overall structural stability of the optical cable connector 100.

For example, the optical cable 140 may include an optical cable body 140 and a reinforcing layer (not shown in the figure) sleeved on the optical cable body 140. For example, the reinforcing layer may be aramid, and the reinforcing layer may be partially pressed between the crimping ring 101 and the main housing 110. In this way, the optical cable 140 may be connected to the crimping ring and the main housing 110 by using the reinforcing layer, so that separation between the optical cable 140 and the main housing 110 can be effectively reduced or avoided, thereby effectively improving firmness and reliability of the connection between the optical cable 140 and the main housing 110.

In this embodiment of this application, the ferrule 1221 may be a ceramic ferrule. Ceramic has high strength and rigidity, so that precision of the ferrule 1221 can be improved, and in a process of interconnecting to the optical cable connector 100, ferrules 1221 at two ends can be better aligned. This helps improve accuracy of alignment of optical fibers in the ferrules 1221, and can effectively reduce a loss of transmission between the optical fibers, to effectively improve efficiency of optical signal transmission between optical cable connectors 100.

In addition, a surface of the ceramic ferrule is smooth and easy to clean, so that dust on the surface of the ferrule 1221 can be effectively reduced, and impact of excessive dust on the surface of the ferrule 1221 on optical signal transmission can be avoided. This helps further reduce the loss and improve the efficiency of the optical signal transmission.

In addition, the ceramic ferrule has the high rigidity and strength, so that damage or breakage of the ferrule 1221 can be effectively reduced or avoided. This helps improve reliability and stability of the optical signal transmission between the optical cable connectors 100.

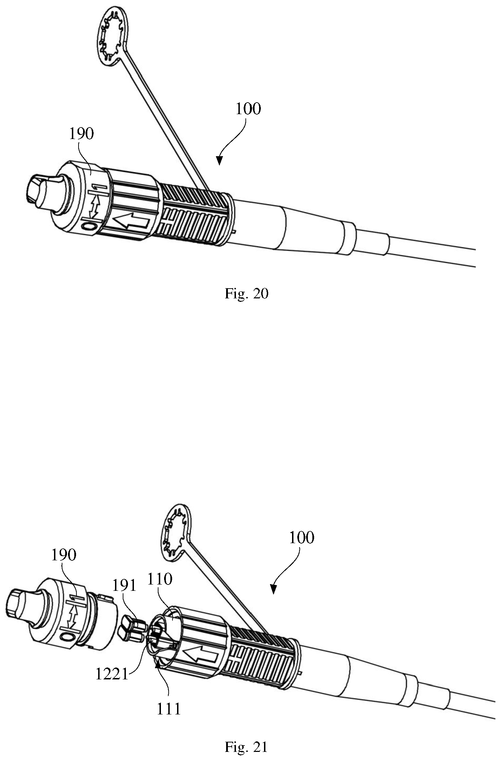

FIG. 20 is a diagram of a structure of mating between a dust cap and an optical cable connector according to an embodiment of this application. FIG. 21 is an exploded view of mating between a dust cap and an optical cable connector according to an embodiment of this application.

With reference to FIG. 20 and FIG. 21, the optical cable connector 100 may further include a dust cap 190. The dust cap 190 may be sleeved on the first end 111 of the main housing 110, and the dust cap 190 may be detachably connected to the main housing 110. The dust cap 190 may cover the main housing 110 when the optical cable connector 100 is not used, and be removed when the optical cable connector 100 is used. The dust cap 190 may provide protection for the ferrule assembly 120 inside the main housing 110, to reduce/avoid a case in which external stains such as dust, water stains, and oil stains enter the ferrule assembly 120 inside the main housing 110, and avoid a case in which the stains enter the ferrule assembly 120, and affect signal transmission of the optical fiber. This helps improve cleanness of the ferrule assembly 120 and improve stability and reliability of the optical cable connector 100.

Still with reference to FIG. 21, the optical cable connector 100 may further include a dust cover 191. The dust cover 191 may cover the ferrule 1221, to protect the ferrule 1221. In this way, a case in which external stains enter the through hole 12211 of the ferrule 1221 can be effectively reduced or avoided. This helps improve cleanness inside the ferrule 1221 and avoid a case in which the stains enter the ferrule 1221, and affect signal transmission between optical fibers, to effectively improve reliability and stability of optical fiber transmission.

FIG. 22 is a diagram of a structure of a connection box according to an embodiment of this application. FIG. 23 is a diagram of a structure of an adapter from a perspective according to an embodiment of this application.

An embodiment of this application further provides a connection box 200. With reference to FIG. 22, the connection box 200 may include a housing 210 and an adapter 220. The adapter 220 may be located on the housing 210. The adapter 220 in the connection box 200 may be configured to mate the optical cable connector 100 provided in any one of the foregoing scenarios. The adapter 220 in the connection box 200 matches the foregoing optical cable connector 100, so that two optical cable connectors 100 inside and outside the connection box 200 can be interconnected via the adapter 220, to implement optical signal transmission. The optical cable connector 100 has high reliability and stability, and can effectively improve stability and reliability of optical signal transmission in the connection box 200.

For example, with reference to FIG. 23, positioning sleeves 221 whose quantity is the same as the quantity of ferrules 1221 in the optical cable connector 100 may be provided in the adapter 220, and the positioning sleeves 221 may be configured to be corresponding to arrangement of the ferrules 1221. For example, in this embodiment of this application, the positioning sleeves 221 may alternatively be arranged in an array in M rows and N columns, so that the positioning sleeves 221 may be in one-to-one correspondence with the ferrules 1221.

A positioning through hole may be provided in the positioning sleeve 221, and two ends of the positioning through hole may separately allow insertion of the ferrules 1221. For example, the positioning sleeve 221 may enable the ceramic sleeve and one end of the positioning through hole to be connected to the exterior of the connection box 200, and enable the other end to be connected to the interior of the connection box 200. The ferrule 1221 that is in the optical cable connector 100 and that is located outside the connection box 200 may be inserted into one end of the positioning through hole, and the ferrule 1221 that is in the optical cable connector 100 and that is located inside the connection box 200 may be inserted into the other end of the positioning through hole, so that the two ferrules 1221 may be interconnected via the positioning sleeve 221, to implement an interconnection between the optical fibers. In this way, connection co-axiality of the ferrules 1221 can be effectively improved, and interconnection accuracy of the ferrules 1221 is improved. Therefore, efficiency of signal transmission between optical fibers is effectively improved.

For example, M is equal to 2 and N is equal to 2, that is, a quantity of ferrules 1221 is 4, and the ferrules 1221 are arranged in two rows and two columns. In this case, the positioning sleeves 221 may also be arranged in two rows and two columns, as shown in FIG. 23, so that the four ferrules 1221 may be inserted into the four positioning sleeves 221 respectively.

FIG. 24 is a diagram of a structure of an adapter from another perspective according to an embodiment of this application.

With reference to FIG. 24, the adapter 220 may be detachably connected to the housing 210 via a nut component 230. For example, the adapter 220 may be separately produced, and then assembled with the housing 210, to form the connection box 200.

Alternatively, in some examples, the adapter 220 and the housing 210 may also be of an integrated structure. For example, the adapter 220 and the housing 210 may be prepared in an integrated injection molding manner or an integrated stamping manner.

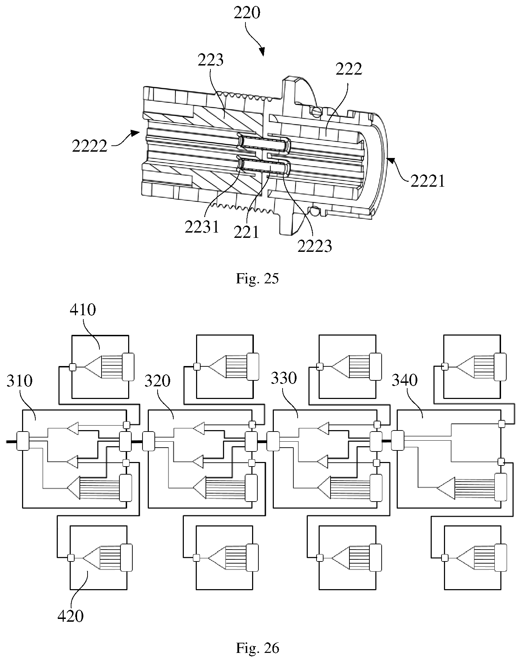

FIG. 25 is a sectional view of an adapter according to an embodiment of this application.

With reference to FIG. 25, the adapter 220 may include a first connecting portion 222 and a second connecting portion 223. The first connecting portion 222 may include a third end 2221 and a fourth end 2222 that are opposite to each other. The third end 2221 may be located on an outer side of the housing 210, the fourth end 2222 may be located on an inner wall of the housing 210, and the second connecting portion 223 may be located on an inner side of the housing 210 and detachably connected to the fourth end 2222 of the first connecting portion 222. A first installation portion 2223 may be provided at the first end 111 of the first connecting portion 222, and a second installation portion 2231 may be provided on the second connecting portion 223. The first installation portion 2223 and the second installation portion 2231 may be disposed opposite to each other. One end of the positioning sleeve 221 may extend through the first installation portion 2223, and the other end may be installed in the second installation portion.

The ferrule 1221 that is in the optical cable connector 100 and that is located on the outer side of the connection box 200 may be inserted into the positioning sleeve 221 located in the first installation portion 2223, and the ferrule 1221 that is in the optical cable connector 100 and that is located on the inner side of the connection box 200 may be inserted into the positioning sleeve 221 located in the second installation portion 2231, so that the two ferrules 1221 can be interconnected via the positioning sleeve 221, to implement signal transmission.

The first connecting portion 222 and the second connecting portion 223 may be separately produced, and then assembled together. For example, the first connecting portion 222 and the second connecting portion 223 may be manufactured in an injection molding manner or a stamping manner.

The adapter 220 includes the first connecting portion 222 and the second connecting portion 223, and the first connecting portion 222 and the second connecting portion 223 are detachably connected. In this way, the first connecting portion 222 and the second connecting portion 223 can be easily demolded, a manufacturing mold of the adapter 220 can be simplified, and molding costs of the adapter 220 can be reduced, to effectively reduce production costs of the adapter 220.

Alternatively, in some examples, the adapter 220 may be of an integrated structure.

The following describes an application scenario of the optical cable connector provided in embodiments of this application with reference to the accompanying drawings.

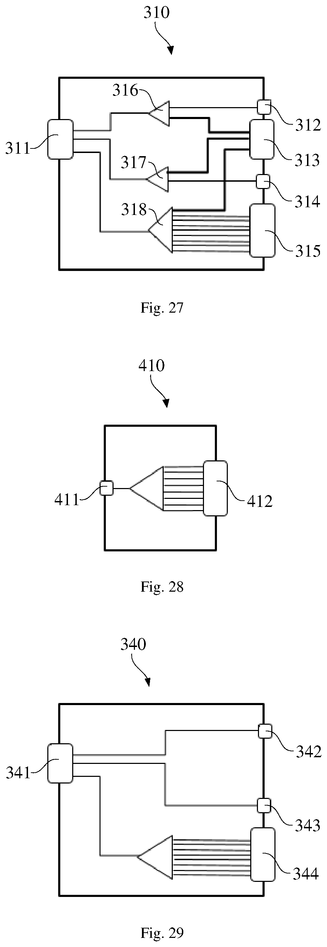

FIG. 26 is a diagram of an application link of an optical cable connector according to an embodiment of this application. FIG. 27 is a diagram of an internal link of a first main connection box according to an embodiment of this application. FIG. 28 is a diagram of an internal link of a first extended connection box according to an embodiment of this application. FIG. 29 is a diagram of an internal link of a fourth main connection box according to an embodiment of this application.

The optical cable connector provided in embodiments of this application may be used in cascading between a plurality of connection boxes. For example, the connection box may be a fiber access terminal (fiber access terminal, FAT), and the plurality of connection boxes may be connected via an optical cable connector. For example, there are four ferrules in the optical cable connector (also referred to as a 4-core optical cable connector). A connection box on a main link may be a main connection box, a new link may be extended on the main link, and a connection box on the extended link may be an extended connection box.

For example, with reference to FIG. 26, there may be four main connection boxes. For ease of understanding, the four main connection boxes may be a first main connection box 310, a second main connection box 320, a third main connection box 330, and a fourth main connection box 340. Each main connection box may include one optical input end and a plurality of optical output ends. For example, with reference to FIG. 27, using the first main connection box 310 as an example, the first main connection box 310 may include one optical input end and four optical output ends. For example, the optical input end may be a first input end 311, and the four output ends may be a first output end 312, a second output end 313, a third output end 314, and a fourth output end 315 respectively. The input end may be a multi-core input end, and the multi-core input end means that an input end of the main connection box is connected to a multi-core optical cable connector (for example, a 4-core optical cable connector), to transmit a signal to the connection box via four optical fibers. For example, in this example, with reference to the figure, there may be optical signals in only three of the four ferrules.

The optical output end may include a single-core output end, a multi-core output end, and a drop end. For example, the first output end 312 and the third output end 314 may be single-core output ends, the second output end 313 may be a multi-core output end, and the fourth output end 315 may be a drop end. The single-core output end outputs an optical signal via one optical fiber, and the multi-core output end outputs a signal via a plurality of optical fibers. The drop end is connected indoors for a user to provide a signal indoors.

An extended connection box may be further connected to the main connection box. For example, with reference to FIG. 26, using the first main connection box 310 as an example, the first main connection box 310 may be connected to two extended connection boxes, and the two extended connection boxes may be a first extended connection box 410 and a second extended connection box 420 respectively. With reference to FIG. 28, using the first extended connection box 410 as an example, the first extended connection box 410 may have one input end and one output end. For example, the first extended connection box 410 may have a second input end 411 and a fifth output end 412. The second input end 411 may be a single-core input end, and the second input end 411 may be connected to the first output end 312 in the first main connection box 310. The fifth output end 412 may be a drop end, and provides a signal for a user.

With reference to FIG. 26 and FIG. 27, using the first main connection box 310 as an example, three optical fiber signals received in the first main connection box 310 may be connected to optical splitters respectively, and the optical splitters may split the signals into a plurality of signals again. For example, as shown in FIG. 27, three optical splitters may be a first optical splitter 316, a second optical splitter 317, and a third optical splitter 318, the first optical splitter 316 and the second optical splitter 317 may be 1:2 optical splitters, and the third optical splitter 318 may be a 1:9 optical splitter.

One optical fiber in the first optical splitter 316 may be connected to the first extended connection box 410 via the first output end 312, and the other optical fiber may be connected to the second main connection box 320 via the second output end 313. One optical fiber in the second optical splitter 317 may be connected to the second extended connection box 420 via the third output end 314, and the other optical fiber may be connected to the second main connection box 320 via the second output end 313. One optical fiber in the third optical splitter 318 may be connected to the second main connection box 320 via the second output end 313, and remaining eight optical fibers may be used for home access, to provide a signal for a user indoors. In this way, there are still three optical fibers connected to the second main connection box 320. For a connection manner of the three optical fibers in the second main connection box 320, refer to a connection manner in the first main connection box 310, to transmit a signal to the third main connection box 330. The third main connection box 330 may transmit a signal to the fourth main connection box 340 in a same manner. With reference to FIG. 29, the fourth main connection box 340 is an end connection box, and the fourth connection box may include one input end and three output ends. For example, the fourth connection box may include a third input end 341, a sixth output end 342, a seventh output end 343, and an eighth output end 344. The third input end 341 may be a multi-core input end, the sixth output end 342 and the seventh output end 343 may be single-core output ends, and the eighth output end 344 may be a drop end. One of three optical fibers inside may be split by an optical splitter and then led indoors for a user via the eighth output end 344, and remaining two optical fibers may be connected to the extended connection box via the sixth output end 342 and the seventh output end 343 respectively.

The first main connection box 310 is still used as an example. The three optical splitters in the first main connection box 310 may be uneven optical splitters. The uneven optical splitter means that signal energy and strength at each output end of the optical splitter are unequal. For example, the first optical splitter 316 and the second optical splitter 317 may be 1:2 uneven optical splitters, and specifications of the optical splitters may be 90/10, 85/15, or 70/30. For example, the first optical splitter 316 is 90/10, that is, in energy of two optical fibers output by the first optical splitter 316, energy of one optical fiber is 90% of total input energy, and energy of the other optical fiber is 10% of the total input energy. A light outlet with less energy may be connected to the extended connection box, and a light outlet with greater energy may be connected to a next main connection box (for example, the second main connection box 320), so that the next main connection box may have sufficient energy to continue to perform transmission to a lower-level main connection box.

Correspondingly, the third optical splitter 318 may be a 1:9 uneven optical splitter. Energy of one output end of the third optical splitter 318 may be great, and energy of remaining eight output ends may be equal. For example, an energy proportion of one output end with great energy may be 90%, 85%, or 70%, and remaining eight output ends may equally share remaining energy, to input the remaining energy indoors for a user.

The extended connection box and the main connection box may be provided by different suppliers, or may be provided by a same supplier. When the extended connection box and the main connection box are provided by different suppliers, and a user terminal needs to switch to another operator, the optical cable connector only needs to be connected from a port of an original operator to a port of another operator.

In the descriptions of embodiments of this application, it should be noted that, unless otherwise explicitly stipulated and restricted, terms "installation", "interconnection", and "connection" should be understood broadly, which, for example, may be a fixed connection, or may be an indirect connection via a medium, or may be internal communication between two components, or may be an interactive relationship between two components. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not cause the essence of corresponding technical solutions to depart from the scope of the technical solutions in embodiments of this application.

## Claims

1. An optical cable connector, comprising:
a main housing (110), wherein the main housing (110) comprises a first end (111) and a second end (112) that are opposite to each other, and a first accommodation cavity (113) that runs through the first end (111) and the second end (112) is provided in the main housing (110);
a ferrule assembly (120), wherein the ferrule assembly (120) is located in the first accommodation cavity (113);
a connecting element (130), wherein the connecting element (130) is located in the first accommodation cavity (113) and is disposed close to the second end (112), and the connecting element (130) is coupled to the main housing (110); and
an optical cable (140), wherein the optical cable (140) partially passes through the connecting element (130) and is connected to the connecting element (130), and one end that is of the optical cable (140) and that is located in the main housing (110) is connected to the ferrule assembly (120).

2. The optical cable connector according to claim 1, wherein a first limiting portion (131) is provided on the connecting element (130), and a second limiting portion (114) is provided on the main housing (110); and
the first limiting portion (131) abuts against the second limiting portion (114), and a coupling relationship is formed between the connecting element (130) and the main housing (110) when the first limiting portion (131) abuts against the second limiting portion (114).

3. The optical cable connector according to claim 2, wherein a pressing surface of the first limiting portion (131) faces the second end (112) of the main housing (110), and a pressing surface of the second limiting portion (114) faces the first end (111) of the main housing (110).

4. The optical cable connector according to any one of claims 1 to 3, wherein a first limiting slot (132) is provided on one of the connecting elements (130) and the main housing (110), and a first limiting block (115) that engages with the first limiting slot (132) is provided on the other of the connecting element (130) and the main housing (110); and
the first limiting block (115) engages with the first limiting slot (132) to limit relative rotation between the main housing (110) and the connecting element (130).

5. The optical cable connector according to any one of claims 1 to 3, further comprising:
a base (150), wherein the base (150) is located in the first accommodation cavity (113) of the main housing (110);
one end of the base (150) is connected to the connecting element (130), and the other end of the base (150) is connected to the ferrule assembly (120) and the main housing (110); and
the optical cable (140) passes through the base (150) and is connected to the ferrule assembly (120).

6. The optical cable connector according to claim 5, wherein a connecting post (151) is provided on one of the bases (150) and the connecting element (130), and a connecting hole (133) that engages with the connecting post (151) is provided on the other of the base (150) and the connecting element (130); and
the connecting post (151) passes through the connecting hole (133), and the connecting element (130) and the base (150) are connected through coordination between the connecting post (151) and the connecting hole (133).

7. The optical cable connector according to claim 5 or 6, wherein a window (152) is further provided on the base (150).

8. The optical cable connector according to any one of claims 5 to 7, wherein a third limiting portion (116) is provided on an inner wall of the main housing (110), and a fourth limiting portion (153) that engages with the third limiting portion (116) is provided on a periphery of the base (150); and
the fourth limiting portion (153) abuts against the third limiting portion (116).

9. The optical cable connector according to any one of claims 1 to 3, further comprising:
a sleeve (160), wherein one end of the sleeve (160) is sleeved on the second end (112) of the main housing (110) and is connected to the main housing (110), and the other end of the sleeve (160) is sleeved on the optical cable (140) and is connected to the optical cable (140).

10. The optical cable connector according to any one of claims 5 to 8, wherein the ferrule assembly (120) comprises:
a housing assembly (121), wherein a second accommodation cavity (1211) is provided on the housing assembly (121); and
a ferrule structure (122), wherein the ferrule structure (122) at least partially passes through the second accommodation cavity (1211).

11. The optical cable connector according to claim 10, wherein the ferrule assembly (120) further comprises:
an elastic component (123), wherein the elastic component (123) is located in the second accommodation cavity (1211), one end of the elastic component (123) abuts against an inner wall of the second accommodation cavity (1211), and the other end of the elastic component (123) is connected to the ferrule structure (122).

12. The optical cable connector according to claim 11, wherein the ferrule structure (122) comprises a plurality of ferrules (1221), a through hole (12211) is provided on each ferrule (1221), the optical cable (140) comprises a plurality of optical fibers, and the plurality of optical fibers extend through the through holes (12211) of the ferrules (1221) respectively; and
at least two ferrules (1221) are connected to one elastic component (123).

13. The optical cable connector according to claim 12, wherein the elastic component (123) is a spring, and the spring is sleeved outside the ferrule structure (122).

14. The optical cable connector according to claim 12, wherein the plurality of ferrules (1221) are arranged in an array in M rows and N columns, wherein M≥2, and N≥2; and
a quantity of elastic components (123) is N, and M ferrules (1221) are provided in each elastic component (123); or
a quantity of elastic components (123) is M, and N ferrules (1221) are provided in each elastic component (123).

15. The optical cable connector according to claim 14, wherein the housing assembly (121) comprises:
a front housing (1212), wherein a first cavity (12121) is provided on the front housing (1212); and
a rear housing (1213), wherein the rear housing (1213) at least partially extends into the first cavity (12121) and is connected to the front housing (1212);
each ferrule (1221) comprises:
a connecting portion (12212), wherein the connecting portion (12212) is located in the first cavity (12121); and
a plug-in portion (12213), wherein the plug-in portion (12213) is connected to the connecting portion (12212), and the plug-in portion (12213) extends out of a front end of the front housing (1212); and
the elastic component (123) is sleeved on the connecting portion (12212), one end of the elastic component (123) is connected to the ferrule (1221), and the other end of the elastic component (123) is connected to the rear housing (1213).

16. The optical cable connector according to claim 15, wherein the front housing (1212) comprises M sub front housings (12122), and the M sub front housings (12122) are sequentially connected in a direction from a first row to an M^{th} row; and
one first cavity (12121) is provided on the sub front housing (12122), one elastic component (123) is provided in each first cavity (12121), and N ferrules (1221) extend through the elastic component (123); or
the front housing (1212) comprises N sub front housings (12122), and the N sub front housings (12122) are sequentially connected in a direction from a first column to an N^{th} column; and
one first cavity (12121) is provided on the sub front housing (12122), one elastic component (123) is provided in each first cavity (12121), and M ferrules (1221) extend through each elastic component (123).

17. The optical cable connector according to claim 15, wherein the front housing (1212) is of an integrated structure, and an isolation wall (121211) is disposed in the first cavity (12121) of the front housing (1212);
the isolation wall (121211) divides the first cavity (12121) into M sub cavities (121212), and the M sub cavities (121212) are sequentially arranged in a direction from a first row to an M^{th} row; and
one elastic component (123) is provided in each sub cavity (121212), and N ferrules (1221) extend through each elastic component (123); or
the isolation wall (121211) divides the first cavity (12121) into N sub cavities (121212), and the N sub cavities (121212) are sequentially arranged in a direction from a first column to an N^{th} column; and
one elastic component (123) is provided in the sub cavity (121212), and M ferrules (1221) extend through each elastic component (123).

18. The optical cable connector according to claim 16 or 17, wherein a quantity of rear housings (1213) is the same as a quantity of M sub front housings (12122) of the front housing (1212), or a quantity of rear housings (1213) is the same as a quantity of N sub front housings (12122) of the front housing (1212); or
a quantity of rear housings (1213) is the same as a quantity of M sub cavities (121212) of the front housing (1212), or a quantity of rear housings (1213) is the same as a quantity of N sub cavities (121212) of the front housing (1212).

19. The optical cable connector according to claim 16 or 17, wherein a plurality of holes (12123) that allow the ferrules (1221) to pass through are provided on a side that is of the front housing (1212) and that faces the first end (111) of the main housing (110), and each ferrule (1221) passes through one hole (12123); and
a connecting rib (12124) is provided between two adjacent holes (12123).

20. The optical cable connector according to any one of claims 15 to 19, wherein a fifth limiting portion (12214) is provided at one end that is of the connecting portion (12212) and that is close to the plug-in portion (12213), and a sixth limiting portion (12125) that engages with the fifth limiting portion (12214) is provided inside the front housing (1212); and
one end of the fifth limiting portion (12214) abuts against the sixth limiting portion (12125), and the other end of the fifth limiting portion (12214) abuts against the elastic component (123).

21. The optical cable connector according to any one of claims 15 to 20, wherein a first groove (12126) is provided on the front housing (1212), and a first clamping portion (12131) that engages with the first groove (12126) is provided on the rear housing (1213); and
the first clamping portion (12131) is clamped in the groove, and the front housing (1212) and the rear housing (1213) are connected through coordination between the first clamping portion (12131) and the first groove (12126).

22. The optical cable connector according to any one of claims 15 to 21, wherein a second clamping portion (12132) is provided at one end that is of the rear housing (1213) and that is away from the front housing (1212), and a second groove (154) that engages with the second clamping portion (12132) is provided on the base (150); and
the second clamping portion (12132) is clamped in the second groove (154), and the base (150) is connected to the rear housing (1213) through coordination between the second clamping portion (12132) and the second groove (154).

23. The optical cable connector according to any one of claims 15 to 22, wherein a second cavity (12133) connected to the first cavity (12121) is provided on the rear housing (1213), and a third cavity (155) in communication with the second cavity (12133) is provided on the base (150); and
the optical fibers in the optical cable (140) sequentially pass through the third cavity (155) and the second cavity (12133) and extend through the through holes (12211) of the ferrules (1221) respectively.

24. The optical cable connector according to any one of claims 1 to 23, further comprising:
a lock cap (170), wherein the lock cap (170) is sleeved on the main housing (110) and rotatably engages with the main housing (110).

25. The optical cable connector according to claim 24, further comprising:
a sealing component (173), wherein the sealing component (173) is located between the main housing (110) and the lock cap (170), and the sealing component (173) is configured to provide sealing between the main housing (110) and the lock cap (170).

26. The optical cable connector according to claim 9, further comprising:
a tail sleeve (180), wherein the tail sleeve (180) is sleeved on the main housing (110), and the tail sleeve (180) is at least sleeved on a part of the sleeve (160).

27. The optical cable connector according to claim 26, wherein a third groove (117) is provided on the main housing (110), and a third clamping portion (181) that engages with the third groove (117) is provided on the tail sleeve (180); and
the third clamping portion (181) is clamped in the third groove (117), and the tail sleeve (180) is connected to the main housing (110) through coordination between the third clamping portion (181) and the third groove (117).

28. The optical cable connector according to claim 9 or 26, wherein the sleeve (160) is heat shrink tubing.

29. The optical cable connector according to any one of claims 12 to 23, wherein the ferrule (1221) is a ceramic ferrule (1221).

30. The optical cable connector according to any one of claims 1 to 29, wherein the optical cable (140) comprises a cable core and an outer sheath, and the outer sheath is sleeved on the cable core; and
the connecting element is sleeved on the outer sheath and bonded to the outer sheath.

31. A connection box, comprising a housing (210) and an adapter (220), wherein the adapter (220) is located on the housing (210), and the adapter (220) is configured to mate the optical cable connector according to any one of claims 1 to 30.

32. The connection box according to claim 31, wherein positioning sleeves (221) whose quantity is the same as a quantity of ferrules (1221) in the optical cable connector are provided in the adapter (220), and the positioning sleeve (221) is configured to be corresponding to arrangement of the ferrules (1221); and
a positioning through hole is provided in each positioning sleeve (221), and two ends of the positioning through hole separately allows for insertion of the ferrules (1221).

33. An optical cable connector, comprising:
a main housing (110), wherein the main housing (110) comprises a first end (111) and a second end (112) that are opposite to each other, and a first accommodation cavity (113) that runs through the first end (111) and the second end (112) is disposed in the main housing (110);
a ferrule assembly (120), wherein the ferrule assembly (120) is located in the first accommodation cavity (113);
an optical cable (140), wherein the optical cable (140) is partially disposed in the main housing (110), and one end of the optical cable (140) located in the main housing (110) is connected to the ferrule assembly (120);
a lock cap (170), wherein the lock cap (170) is sleeved on the main housing (110) and rotatably engages with the main housing (110);
one of the main housing (110) and the lock cap (170) is provided with a third limiting block (119), the other of the main housing (110) and the lock cap (170) is provided with a seventh limiting portion (171), a first notch (172) is provided on the seventh limiting portion (171), and the first notch (172) is configured to allow the third limiting block (119) to pass through.

34. The optical cable connector according to claim 33, wherein the third limiting block (119) is located on an outer side of the main housing (110), and the seventh limiting portion (171) is located on an inner wall of the lock cap (170) and is disposed along a circumferential direction of the inner wall.

35. The optical cable connector according to claim 34, wherein the lock cap (170) is located at the first end (111) of the main housing (110), and the seventh limiting portion (171) is located on a side of the third limiting block (119) facing the first end (111).

36. The optical cable connector according to any one of claims 33 to 35, wherein an opening groove (1111) is disposed at a first end of the main housing (110), and the opening groove (1111) extends from an end of the main housing (110) along an axial direction of the main housing (110).

37. The optical cable connector according to claim 36, wherein a flange (1101) is disposed on a periphery of the main housing (110), the opening groove (1111) extends to a position close to the flange (1101), a limiting platform (175) is disposed on an inner wall of the lock cap (170), and the flange (1101) abuts against the limiting platform (175).

38. The optical cable connector according to claim 37, wherein two fourth limiting blocks (176) are disposed on one of the main housing (110) and the lock cap (170), and the two fourth limiting blocks (176) are disposed at intervals in a circumferential direction;
the other of the main housing (110) and the lock cap (170) is provided with a second limiting column (1102), the second limiting column (1102) is located between the two fourth limiting blocks (176), and the second limiting column (1102) can rotate within an angle range defined by the two fourth limiting blocks (176).

39. The optical cable connector according to claim 38, wherein the second limiting column (1102) is located on an outer wall of the flange (1101);
the two fourth limiting blocks (175) are located on an inner wall of the lock cap (170), and the two fourth limiting blocks (175) are disposed at intervals in a circumferential direction of the lock cap (170).

40. The optical cable connector according to claim 37, wherein a fifth limiting block (177) is disposed on an inner wall of the lock cap (170), the fifth limiting block (177) is disposed in a circumferential direction of the lock cap (170), and there is a spacing (1771) between a front end and an end of the fifth limiting block (177);
a second limiting column (1102) is disposed on an outer wall of the flange (1101), the second limiting column (1102) is located in the spacing (1771) between the front end and the end of the fifth limiting block (177), and the second limiting column (1102) can rotate within an angle range defined by the front end and the end.

41. The optical cable connector according to claim 37, wherein the flange (1101) is provided with a second notch, and the lock cap (170) is provided with a third limiting column;
the third limiting column is located in the second notch, and the third limiting column can rotate within an angle range defined by the notch.

42. The optical cable connector according to any one of claims 33 to 35, wherein the main housing (110) is of an integrated structure.

43. The optical cable connector according to any one of claims 33 to 35, further comprising a crimping ring (101), wherein the crimping ring (101) is sleeved on the optical cable (140) and connected to the optical cable (140);
the crimping ring (101) is further sleeved on the second end (112) of the main housing (110), and the crimping ring (101) is configured to press the optical cable (140) tightly against the main housing (110).

44. The optical cable connector according to claim 43, wherein the optical cable (140) comprises an optical cable body and a reinforcing layer sleeved on the optical cable body, and the reinforcing layer is partially pressed between the crimping ring (101) and the main housing (110).

45. The optical cable connector according to any one of claims 33 to 35, further comprising:
a connecting element (130), wherein the connecting element (130) is located in the first accommodation cavity (113) and is disposed close to the second end (112), and the connecting element (130) is coupled to the main housing (110);
a part of the optical cable (140) is routed through the connecting element (130) and is connected to the connecting element (130).

46. The optical cable connector according to claim 45, wherein the connecting element (130) is provided with a first limiting portion (131), and the main housing (110) is provided with a second limiting portion (114);
the first limiting portion (131) and the second limiting portion (114) abut against each other, and the coupling relationship is formed between the connecting element (130) and the main housing (110) by means of abutting between the first limiting portion (131) and the second limiting portion (114).

47. The optical cable connector according to claim 46, wherein an abutting surface of the first limiting portion (131) faces the second end (112) of the main housing (110);
an abutting surface of the second limiting portion (114) faces the first end (111) of the main housing (110).

48. The connector according to claim 45, wherein one of the connecting element (130) and the main housing (110) is provided with a first limiting slot (132), and the other of the connecting element (130) and the main housing (110) is provided with a first limiting block (115) that engages with the first limiting slot (132);
the first limiting block (115) engages with the first limiting slot (132), to restrict relative rotation between the main housing (110) and the connecting element (130).

49. The optical cable connector according to any one of claims 33 to 35, further comprising:
a base (150), wherein the base (150) is located in a first accommodation cavity (113) of the main housing (110);
one end of the base (150) is connected to the ferrule assembly (120) and the main housing (110), and the other end of the base (150) is connected to the optical cable (140).

50. The optical cable connector according to claim 49, wherein one of the main housing (110) and the base (150) is provided with a fourth limiting portion (153);
the other of the main housing (110) and the base (150) is provided with a fourth groove (1161), and the fourth limiting portion (153) is clamped in the fourth groove (1161).

51. The optical cable connector according to claim 49, wherein the base (150) is provided with a shoulder portion (157) on an outer circumference, the main housing (110) is provided with an elastic clamping portion (1103), and the elastic clamping portion (1103) abuts against an end face of the shoulder portion (157).

52. The optical cable connector according to any one of claims 33 to 35, wherein the ferrule assembly (120) comprises:
a housing assembly (121), wherein the housing assembly (121) has a second accommodation cavity;
a ferrule structure (122), wherein the ferrule structure (122) is at least partially disposed in the second accommodation cavity;
an elastic component (123), wherein the elastic component (123) is located in the second accommodation cavity, one end of the elastic component (123) abuts against an inner wall of the second accommodation cavity, and the other end of the elastic component (123) is connected to the ferrule structure (122).

53. The optical cable connector according to any one of claims 33 to 35, wherein a front end of the ferrule assembly (120) protrudes from a first end (111) of the main housing (110), and the first end (111) of the main housing (110) protrudes from a front end of the lock cap (170).

54. A connection box, comprising a housing (210) and an adapter (220), wherein the adapter (220) is located on the housing (210), and the adapter (220) is configured to mate with the optical cable connector according to any one of claims 33 to 53.
